# EUROPEAN PATENT APPLICATION

(11) **EP 4 699 963 A1**
(43) Date of publication of application: **25.02.2026**
(21) Application number: 25197674.2
(22) Date of filing: 22.08.2025
(51) Int. Cl.: B65G 17/08, B65G 21/18

(54) **SPIRAL CONVEYOR SYSTEM WITH DIRECT CAGE ENGAGEMENT**

(30) Priority: 22.08.2024 US 202418812999
(71) Applicant: Ashworth Bros., Inc., Fall River, MA 02721 (US)
(72) Inventor: BARAKAT BISCIONI, Ricardo Pio, 17018-730 Sao Paulo (BR)
(74) Representative: Weickmann & Weickmann PartmbB

(57) **Abstract**

Disclosed herein are embodiments of a spiral conveyer belt system. Embodiments of the system allow for a longer compressed pitch and improved engagement/disengagement interactions between a drum and an inner edge of a spiral conveyor belt while maintaining necessary product support and belt support strength. In part, the disclosures relate to a grooved, "ribless" cage bar cap, wherein grooves extend below an outer-facing surface of the cage bar cap and are configured to engage with a belt support rod inner-end or a belt-link tab. The bar cap groove may be straight (generally orthogonal to the outer-facing surface) or angled to better engage and drive the belt so the belt cannot slip forwards or outwards with respect to a drum outer boundary.

## Description

### RELATED APPLICATIONS

This application claims priority of U.S. Provisional Application No. 63/534,078 entitled "Spiral Conveyor System with Direct Cage Engagement" filed on August 22, 2023, and U.S. Provisional Application No. 63/534,549 entitled "Spiral Conveyor System with Direct Cage Engagement" filed on August 24, 2023, the disclosures each of which are incorporated herein by reference in their entirety.

### BACKGROUND

### Technical Field

The disclosures herein relate to direct-driven spiral belt systems. Specifically, the disclosed invention relates to a spiral belt and matching drive system configured for direct belt-drive cage engagement.

### State of the Art

Spiral conveyor belt systems enjoy widespread use in the manufacturing and commercial food processing industries. A spiral system is, essentially, a conveyor belt that moves in a corkscrew-shaped path to vertically transit items on the belt along lengthened helical path. This is useful to move parts through a process across different vertical levels using a small footprint. Spiral belts used create a long path within a small space are used to move food products through a cooler or oven to freeze, cool, or cook food products during a lengthier time frame. The helical configuration used by a spiral system can accommodate hundreds of meters of belt path within a relatively small floor area.

The conveyor belt encircles a rotating drum. The drum may present an essentially unbroken surface or be formed from a series of vertically oriented bars spaced apart at intervals in a cage assembly. The drum engages the belt along the inner radius of the belt's helical path to move it forward. In some systems, this is accomplished by simple friction between the drum or cage and the inner-radius edge of the belt, as described in US 3,348,659, for example. In other systems, a feature known as a "cage bar cap" often made from plastic and coupled to vertical rods of a drum cage structure engages with a corresponding feature on the inner belt radius, typically one of the protruding horizontal belt rods, as described in US 4,932,925, for example. Traction elements of a spiral system may additionally include a central cage, sprockets at the outside links of the belt, or even a drive chain disposed on the underside of a self-stacking belt.

Powered rotation of the drum moves the belt along the helical path. A secure but releasably coupling between the drum outer surface, which may be a cage bar, and the inner helical edge of the belt is essential for proper function of any spiral conveyor belt system. Cage drums with the vertical cage bars fitted with cage bar caps-typically U-shaped links or flat bar links-are currently widely used. The "U" shape of the bar cap is open facing inward to couple with the cage bar and having an opposite-facing surface that engages rod ends of the belt protruding inwardly, thus driving the belt forward, This is shown in US 4,741,430.

This and other designs have serious problems with engagement and control of belt tension that lead to disengagement of the conveyor belt ("belt") from the drum cage. Such disengagement may result in damage to the product carried by the belt, damage to the belt, and damage to the drive cage. Complete disengagement, which is not uncommon, causes the belt to "crash the uprights of the uprights of the spiral structure leading to loss of product and catastrophic damage to multiple components of the system. Specifically, cage bar deflection arising from a design that is structurally weak or that does not prevent the belt from moving forward with respect to the drive member or outwards from the drive cage can result.

Additionally, the inner radius of the belt spiral is determined by both the distance between belt the inner ends of the belt support rods and the outer ends of the belt support rods. This inter-rod distance is limited by the belt link design, the belt's maximum compressed pitch along the inner edge belt path and the belt expanded pitch along the outer edge belt path. Compressed and expanded pitch refer to the distance between identical locations on adjacent belt links and when the belt inner edge (compressed) or belt outer edge (expanded) respectively are moving along a curved path. A longer "compressed pitch" affects the distance between belt structures engaging the drive drum, such as the inner ends of the belt support rods or adjacent belt link tabs, for example, along the inner belt-edge helical radius and is desirable over the prior art because product support and belt strength is lost across longer pitches without adequate belt rod support. Small radius spiral conveyor belt systems require a smaller footprint because of the smaller helical path inside radius and are thus advantageous over conventional systems that require a larger floor area. The size of the inside radius is limited by existing belt link designs.

For at least the foregoing reasons, there is a need for a spiral conveyor belt system that overcomes the deficiencies discussed herein above.

### BRIEF SUMMARY

Disclosed herein are embodiments of a spiral conveyer belt system. Embodiments of the system allow for a longer compressed pitch and improved engagement/disengagement interactions between a drum and an inner edge of a spiral conveyor belt while maintaining necessary product support and belt support strength. In part, the disclosures relate to a grooved, "ribless" cage bar cap, wherein grooves extend below an outer-facing surface of the cage bar cap and are configured to engage with a belt support rod inner-end or a belt-link tab. The bar cap groove may be straight (generally orthogonal to the outer-facing surface) or angled to better engage and drive the belt so the belt cannot slip forwards or outwards with respect to a drum outer boundary. In some embodiments, the engagement is accomplished by means of different link shapes, for example, a ρ ("rho")-shaped link for grid belts and a Ψ ("psi")-shaped link for flex belts. Conventional belts employ a link coupled to two belt support rods. The link shapes disclosed herein couple to at least three support rods to increase the compressed pitch while maintain strength and product support (because longer links are used to accommodate the additional support rod), increasing the average distance between support rod ends along an inner helical path radius in a maximally-collapsed belt configuration. This incremental increase in compressed pitch arises from greater spacing between rod ends in a specially designed drum-bar cap engagement. Various link-shape embodiments allow a ribless engagement or a grooved engagement instead of the rib engagement between existing U-shaped links in the prior art. Additionally, the drum cage is designed to allow the belt to travel across a non-cylindrical, frustrum-shaped drum outer surface configured to transition between a larger first radius and a smaller compressed second radius as measured from the drum outer surface to the central axis of rotation. A decreasing radius between a belt infeed and a belt outfeed on the drum outer surface reduces belt tension along the helical path, adding stability to the drum-belt interaction.

Disclosed is a spiral conveyor system comprising a belt formed from a plurality of segments and configured to move along a helical path, the belt having a belt width, an inner edge, and an outer edge, wherein the inner edge translates the helical path having an inside radius and the outer edge translates the helical path having an outside radius; each of the plurality of segments comprising at least one rod having an elongate shape with a central portion terminating at an inner end and an outer end and at least one link coupled to the at least one rod, wherein each segment is movably coupled to two adjoining segments; a drum formed generally as a cylinder having a central longitudinal axis coaxial with the helical path and an outer boundary, wherein the drum is configured to rotate around the central longitudinal axis and to releasably interact with each of the plurality of segments at the outer boundary; wherein the belt moves along the helical path in response to the sequential interaction between the drum outer boundary and the belt segments as the drum rotates.

In some embodiments, the helical path inner radius is less than about one point six (1.6) times the belt width.

In some embodiments, the link comprises a first leg and a second leg, wherein the first leg and the second leg are generally parallel. In some embodiments, the first leg comprises at least one circular cutout and at least one semicircular cutout, and the second leg comprises a slot cutout. In some embodiments, each rod inner end is moveably coupled to three links. In some embodiments, the first leg rotatably couples to two rods and the second leg rotatably and slidably couples to a third rod, wherein the third rod is rotatably but not slidably coupled to an adjacent link.

In some embodiments, the drum sequentially interacts with the belt segments by mechanical engagement with a rod inner end or a link tab. In some embodiments, the rod central portion is not coupled to a link. In some embodiments, the drum releasably engages with the inner edge of the belt. In some embodiments, the drum comprises a plurality of bars disposed around the outer boundary, each bar configured to releasably engage with a plurality of belt rod inner ends simultaneously.

In some embodiments, the plurality of bars are coupled to a corresponding plurality of cage bar caps wherein the cage bar caps reversibly interact with the belt inner edge. In some embodiments, the rod inner ends comprise an angle. In some embodiments, the spiral drum system further comprises a groove disposed on at least some of the plurality of bars and a tab disposed on at least some of the plurality of links, wherein rotation of the drum causes sequential engagement and disengagement of the tabs by the grooves causing the belt to advance along the helical path. In some embodiments, the drum is a ribless drum. In some embodiments, the drum engages with the outer edge of the belt. In some embodiments, the system further comprises a sprocket configured to engage with a belt outer edge.

In some embodiments, the drum further comprises an infeed and an outfeed, wherein the infeed and the outfeed are disposed on the outer boundary at separate axial locations, wherein the interaction between the drum and the segments occurs along a length of the drum central longitudinal axis beginning at the infeed and terminating at the outfeed; a first radius between projecting from the longitudinal axis to the outer boundary between the infeed and the outfeed; a second radius projecting from the longitudinal axis to the outer boundary at one or both of the infeed and the outfeed; and ramp disposed on the outer boundary, wherein the second radius is greater than the first radius, the second radius transitions to the first radius along the ramp, and wherein the ramp is configured to move the belt inward from the second radius to the first radius beginning at the infeed and outward from the first radius to the second radius ending at the outfeed.

Also disclosed is a spiral conveyor system comprising a belt having from a plurality of segments and configured to move along a helical path, the belt having a belt width, an inner edge, and an outer edge, wherein the inner edge translates the helical path along an inside radius and the outer edge translates the helical path along an outside radius, each of the plurality of segments comprising at least one rod having an elongate shape with a central portion terminating at an inner end and an outer end and at least one link coupled to the at least one rod, wherein each segment is movably coupled to two or more adjoining segments; and a rotatable drum having a plurality of bars arranged around a central longitudinal axis forming a cage, and a plurality of bar caps fitted to some or all of the plurality of bars, wherein the bar caps define an outer boundary of the drum, wherein the drum is configured to rotate around the central longitudinal axis coaxial with the helical path and to releasably interact with each of the plurality of segments at the outer boundary, and wherein the belt moves along the helical path in response to the sequential interactions between the drum outer boundary and the belt segments effected by the rotating drum.

In some embodiments, each of the plurality of bar caps comprises a groove. In some embodiments, the groove forms a non-orthogonal angle with the central longitudinal axis and is configured to releasably and simultaneously interact with two belt segment support rod ends bent at a corresponding non-orthogonal angle. In some embodiments, each of the plurality of bar caps comprises a tab.

The features and advantages of the invention will be apparent to those of ordinary skill in the art from the following more particular description of several example embodiments of the disclosed system and methods, and the accompanying drawings.

### BRIEF DESCRIPTION OF THE DRAWINGS

**FIG. 1** is a perspective view of an example prior art spiral conveyor system;
**FIGs. 2A-B**are a top views of a portion of a spiral conveyor belt comprised of rod links and U-links respectively;
**FIG. 3A** is a top view of a prior art flex-style spiral conveyor belt with links in a collapsed configuration;
**FIG. 3B** is a top view of a is a top view of a prior art grid style, U shaped link spiral conveyor belt with links in a collapsed configuration;
**FIG. 3C** is an enlarged perspective view of a prior art U-link;
**FIGs. 4A-B** are perspective views of examples of a three-rod belt link;
**FIGs. 5A-C** are perspective views of example of a rho belt link;
**FIG. 6A** is a diagram of a drum in a spiral conveyor system moving a belt in a helical path;
**FIG. 6B** is a perspective view of a length of belt;
**FIGs. 7A-D** are perspective views of example embodiments of psi link components;
**FIGs. 8A-B** are perspective views of additional example embodiments of psi link components;
**FIG. 9** is a diagram of a section of a spiral conveyor belt formed from psi links;
**FIG. 10** is a perspective illustration of a group of tapered cage bar caps disposed around a perimeter of a drive drum;
**FIG. 11** is a perspective view of a tapered cage bar cap;
**FIG. 12** is a perspective view of a drum of a spiral conveyor system;
**FIG. 13** is a top-view of a section of a rho-link spiral conveyor grid belt collapsing on a curve;
**FIG. 14** is a top-perspective view of a three-rod rod-link spiral conveyor belt collapsing on a curve;
**FIG. 15** is a top view of a "three-rod" U-link spiral conveyor belt interacting with a series of ridgeless cage bar caps;
**FIG. 16A** is an enlarged view of a bent rod-end belt interacting with a cage bar cap groove;
**FIG. 16B** is an enlarged view of a bent support rod inner end;
**FIGs. 17A-D** are diagrams of sections of cage bar caps;
**FIGs. 18** is a perspective view of a ribless transition element;
**FIGs. 19A** is a top cutaway view of an arc of a drum having ribless transition elements alternating with cage bar caps;
**FIG. 19B** is a perspective sectional view of an arc of a drum having ribless transition elements alternating with cage bar caps;
**FIG. 20** is a side view of an arc of a drum having ribless transition elements alternating with cage bar caps;
**FIG. 21** is a perspective view of an arc of a drum having only ribless transition elements and no cage bar caps;
**FIG. 22A** is a perspective view of an arc of a drum having only ribless transition elements and no cage bar caps;
**FIG. 22B** is magnified view of an arc of a drum having ribless transition elements alternating with cage bar caps;
**FIG. 23** is a perspective view of an arc of a drum having alternating ribless transition elements and cage bars and an entrance ring;
**FIG. 24** is a top cutaway view of an arc of a drum having ribless transition elements alternating with cage bar caps and an entrance or exit ring coupled to the transition elements;
**FIG. 25** is a top view of a segment of belt comprising U-shaped links engaged on a ribless belt drum;
**FIG. 26** is a top view of a segment of belt comprising rho-shaped links engaged on a ribless belt drum;
**FIGs. 27A-C** are magnified side views of cage drums bearing an exit ring;
**FIG 28** is a partial view of links of a belt engaging with and disengaging from a cage drum having an entrance ring and transition elements; and
**FIG. 29** is a top perspective view of a recessed exit ring mounted on a cage drum.

### DETAILED DESCIPTION

Various example embodiments of a spiral conveyor system are discussed herein. The system includes a belt driven by a drum along a helical path (spiral) utilizing belt link designs and drum engagement features that allow for a tighter turning radius under reduced tension. Embodiments of the system have advantages over existing spiral conveyor systems, including, for example, use of a smaller footprint and decreased chance of belt disengagement leading to product loss and system damage.

Details of a spiral conveyor system with direct drum engagement are first discussed generally, followed by descriptions with reference to the several drawing figures. It is conceived that the concept of providing a spiral conveyor system with direct drum engagement which may be enabling a compressed pitch and the benefits associated therewith is within the scope of these disclosures. The utility of such a system as disclosed herein, not merely with the disclosed embodiments but across a range of belt links and cage bar cap designs will be immediately appreciated by one of skill in the art.

### Definitions:

As used herein, "cage" refers to a drum component mechanically interacting with a belt, causing movement of the belt along a helical path. "Cage drive" is a type of drum. The cage drive is generally configured as an array of vertical elements, such as cage bars, for example, extending between to generally circular end elements forming a generally cylindrical cage-like structure. The circular end elements may each have the same radius or different radii, whereupon the drum itself has a frustrum shape with either a decreasing radius or an increasing radius from a drum bottom end element to a drum top end element. Wherein the end elements have different radii, a generally tapered cylindrical cage may be formed.

As used herein, "belt" means an elongated, continuous, flexible structure formed from a plurality of links coupled together with a plurality of rods oriented orthogonal to the links. In some embodiments, the belt includes a mesh or wire grid providing a surface upon which product transported by the spiral conveyor system rests. "Belt" encompasses all structures and substructures moving along a helical path. "Belt" is used loosely in certain disclosures herein to refer to a limited length of an entire belt structure.

As used herein, "belt support rod," "belt rod," or "rod" all have the same meaning, referring to an elongate structure having a circular or ovoid cross section extending in a direction orthogonal to a belt link. The belt rod extend the full width of the belt. The belt rod may be generally straight along its entire length or may comprise a bent end section to facilitate interaction with a belt drive drum, crank, or other drive structure, in some embodiments.

As used herein, "cage bar" means a generally elongated structure forming part of the structure or disposed upon the surface of a belt drive drum. The cage bar is part of the drive drum assembly and not part of the belt. A cage bar interacts with an inner belt edge by way of a "bar cap" mounted on the bar, in some embodiments.

As used herein, "link" means a structure disposed along one of the edges (inner edge and outer edge) of a belt. The link is part of the belt. Each single link is coupled to two adjacent links-one forward link and one trailing link with respect to the direction of belt travel-by two or three support rods, in some embodiments.

As used herein "cage bar cap" means a structure mounted on a cage bar and configured to frictionally or mechanically interact with a belt edge. The cage bar cap is the point of coupling between the drive drum and the belt. The cage bar cap can be formed in many different configurations to interact with the belt edge in different ways, many examples of which are described herein.

As used herein, "rib," "cage rib," or "bar cap rib" is a structure disposed on the outer surface (belt inner edge-facing surface) of a cage bar or cage bar cap. The rib protrudes from the outer surface of the cage bar or cage bar cap and interfaces with the belt inner edge. A "ribless system" or a "ribless cage bar" does not comprise ribs; i.e., the drive drum does not engage with the belt inner edge by means of a protruding structure, but rather engages by means of a non-protruding structure such as a groove, a channel, or simply with a generally flat surface by friction.

As used herein, "system turn ratio" means the ratio between the radius traveled by the inner belt edge along a helical path; i.e., the distance from the inner belt edge to the central axis of the helical path, and the belt width.

As used herein, "compressed pitch" means the linear distance from one point on a belt link to the same point on an adjacent belt link in a configuration wherein the belt is fully (maximally) collapsed. In a fully collapsed configuration, the belt links slide along the belt long axis, i.e., parallel to the direction of travel of the moving conveyor belt, with respect to the belt rods, as will be shown in the figures and descriptions below. A compressed pitch occurs along the inner edge of the belt adjacent to the cage drive drum where the belt is in a helical configuration as it passes through multiple turns ("tiers") around the cage drive drum. The inner-edge of the belt moves in a path tracing a helix having an inner radius. The outer-edge of the belt moves in a similar helical path having an outer radius. Otherwise stated, the inner radius is the linear distance from a central axis of rotation of the drive drum and the inner belt edge. The outer radius is the corresponding linear distance from the central axis of rotation of the drive drum and the outer belt edge. The outer radius of the belt helical path (belt outer edge) is inherently larger than the inner radius of a belt helical path.

As used herein, "expanded pitch" means the longest possible distance between two adjoining belt rods when a belt is in a fully expanded configuration. In a fully expanded configuration, the belt links slide along the belt long axis, i.e., parallel to the direction of travel of the moving spiral conveyor belt, with respect to the belt rods, as will be shown in the figures and descriptions herein below. An expanded pitch occurs along the outer "free" edge of the belt opposite the cage drive drum when the belt is in a helical configuration as it passes through multiple turns around the cage drive drum. The outer-edge of the belt moves in a path tracing a helical path having an outer radius and generally parallel to the inner helical path having an inner radius traced by the inner-edge of the belt as it moves around the cage drive drum.

As used herein, "small radius system" refers to spiral conveyor belt systems configured to travel along a helical path with an inner radius lass than about 1.6 times the belt width. Correspondingly, a "reduced radius belt" refers to a spiral conveyor belt able to move along a helical path having an inner radius less than about 1.6 times the belt width. A belt restricted to a helical path having an inner radius of equal to or greater than about 1.6 times the belt width is considered a standard belt.

As used herein, a "positive drive system" or "positive driven system" means a belt system wherein there is direct mechanical engagement between a cage bar cap feature and corresponding feature on the belt, such as a support rod end, for example. This is in contrast to a friction-drive system wherein such direct mechanical engagement between complementary features on the cage drive and the belt is absent.

Spiral conveyor systems may be friction-driven or driven by mechanical engagement between the cage drive and a feature presented by the conveyor belt, as described in the Background section herein above. In some applications, a friction drive, whereunder the drum engages with the belt to cause movement merely by friction with an edge of the belt, is advantageous where some backward slippage of the belt on the drum may be desirable for proper operation. In other applications, however, slippage between the drum and the belt is not desirable and direct mechanical engagement between a feature of the belt and a corresponding feature on drum drive cage is required. Consequently, a spiral conveyor system utilizing direct engagement between the drive cage and the conveyor belt is disclosed.

The belt links disclosed herein differ from prior art U-shaped grid belts and rod-link side-by-side flex belts of the prior art in that a grooved cage bar cap, a rho-shaped ("ρ-link"), and a psi ("Ψ-link") are provided. The ρ-link and the Ψ-link allow simultaneous engagement with three belt-rod ends versus two belt-rod ends as in the prior art. Each belt link (ρ-link or Ψ-link) is coupled to two belt rods. In some embodiments, a third rod is coupled to an adjacent link.

In a spiral belt system, the compressed pitch (inner edge with respect to a belt engaged by a drum between an infeed and an outfeed) of the belt links and the minimum radius of curvature of the inner edge of the belt path where the belt is engaged by the drive cage are determined by belt link design. The ρ and Ψ link shapes, when disposed at the inner belt radius of a spiral conveyor belt, allow for a longer compressed pitch but, paradoxically, have a smaller inside radius than prior art belt links. The longer compressed pitch enabled by the link designs disclosed herein enable entry of link tabs or belt support rod inner ends to enter a groove or channel on a cage bar or bar cap in a ribless spiral belt system. The link designs disclosed herein also simultaneously allow a greater expanded pitch along the outer belt edge.

An increased compressed pitch confers multiple advantages to a spiral conveyor system driven by direct engagement between the belt and the drum. For example, the belt engagement features, such as a rod end or a link tab, could enter a groove on the cage bar or cage bar cap. Alternatively, the drum could drive the belt directly by friction without direct engagement between belt features and ribs or cage bar caps. For example, a smaller inner radius allows use of smaller diameter drums, decreasing the footprint of the system. In some embodiments, belt links are configured to couple with three belt rods per link versus two rods per link. This substantially decreases belt tension generated by the drum drive cage, reducing component wear, and extending the usable life of the system. Reduced tension along the inside radius of the belt path decreases the chance of unplanned disengagement of the belt from the drum. Such unplanned disengagement with a belt under tension may lead to product loss and catastrophic damage to the entire spiral conveyor system.

For a prior art belt having an expanded pitch of about 1.0 inches, the compressed pitch is about 0.6 inches for a standard-width belt measuring approximately. In a second prior-art example, for a belt having an expanded pitch of about 1.5 inches, the compressed pitch is about 0.9 inches. For a cage bar cap to drive such a belt, the ribs on the cage bar caps must be narrower than at least the compressed pitch (plus a manufacturing tolerance) to allow the cage-bar caps to engage the belt-rod ends. For a drum fitted with cage bar caps to drive a belt on one of these prior-art systems, belt engagement features, such as ribs on the cage bar caps, must be thinner than the compressed pitch such that engagement between the belt rods and cage bar ribs can occur. In related systems having cage bar ribs disposed above the surface of the cage bar cap, the rib must fit in between the belt rod ends of the compressed pitch with some "play" in order to engage and drive the belt forward. Consequently, the rib thickness must not be greater than the compressed belt pitch. This is one reason why U-shaped belt links cannot work with a ribless cage bar cap and still be driven by the leading face of a ribless cage bar cap. For such prior art systems utilizing belts with U-shaped links, the minimum width of the cage bar caps must be at least about 1.0 inches.

The increased inner spacing of the belt compressed pitch provided by the rho and psi-shaped links disclosed herein is considerable and permits use of a ribless cage bar cap or a grooved cap instead of a rib extending above the surface of the cap. The cage bar cap can, therefore, be configured wider than a than a rib. The leading face of a 1-inch side ribless cage bar cap used in a friction-driven spiral belt system could also drive a belt fitted with rho or psi links. This is not possible with prior-art U-shaped links that are too large to enter the space between the cage bar caps to engage the belt.

An additional advantage of the ribless cap engagement beyond allowing for a larger compressed pitch is a more secure engagement between the cage bar cap and the belt. This is because rib engagement with the belt restricts forward (in the direction of belt travel) or outward slipping of the belt, as opposed to a cage bar cap having a grooved engagement feature. A small-thickness rib may deflect on larger rib-drive systems when higher belt tensions and loads are applied, favoring disengagement of the belt from the cage bar drive.

In contrast, for some embodiments having a collapsed rho or psi-shaped link coupled to adjacent rods spaced 1.08 inches is 1.48 inches. The compressed pitch of a reduced-radius rho or psi-shaped link belt is 1.38 inches, in some embodiments, thus the compressed pitch is more than doubled when compared to prior-art U-shaped links for the same adjacent rod distance on a fully expanded belt. Belts on a positive-drive spiral system are not intended to slip backwards (against the direction of belt travel), although during operation on a curve, the belt tends to be outwardly biased as is passes around each turn of the spiral path, particularly at higher belt speeds and heavier belt loads as a consequence of angular momentum. A ribbed drive system favors disengagement of such systems, as mentioned previously. Use of a grooved cage bar cap as discussed herein, however, allows for movement in additional degrees of freedom ("DOF") and a belt having an edge feature that can positively engage with a grooved cage bar cap is necessary for optimum operation of the system to achieve secure engagement between the cage bar cap and the belt link.

Belts 102 having three support rods 111 per link are inherently stronger than two-rod belts from the prior art and provide greater support to product resting upon and being transported by belt 102. Converesely, adding an additional rod to each link thereby converting a prior-art two-rod per link configuration to the three-rod link disclosed herein, also increases the compressed pitch of the belt making it unnecessary for the drive drum to incorporate a feature protruding above or below the plane of belt travel, such as a cage rib. Increasing compressed pitch to enable ribless drive drums without adding a third belt support rod results in decreased belt product support strength, which is not desirable. Use of the grooved cage bar cap disclosed herein securely engages the belt and simultaneously constrains motion of the belt on the cage drive in forward, backward, and radial (outward) directions, thereby reducing the likelihood of unwanted belt disengagement and catastrophic system failure.

In some embodiments discussed herein, the cage bar cap groove may be angled (not radially aligned with the drive cage central axis rotation).

Spiral belts having two radially arranged rods (extending across the belt generally perpendicular to the direction of travel) coupled to each belt link are described in the prior art. For spiral belt systems using a positive-engagement drive, however, stability of the belt is essential to protect the product being conveyed. A spiral belt having three rods coupled to each belt link is more stable than a two-rod-per link belt. Two of the three rods coupled to each belt link described herein move together with the belt in direction above or below the belt travel path when the belt travels over "bumps" or imperfections in the helical path. This more uniform movement of two rods together reduces any "bouncing" movement of the product.

A belt on a positive drive system must be precisely controlled at the helix infeed and outfeed locations by torque motors to maintain proper belt tension for resisting belt disengagement. If the outfeed torque motor fails to provide adequate torque, the belt upstream from the outfeed slackens and can disengage if the cage-belt engagement features do not provide forward or outward resistance to belt movement with respect to the cage. In some cases, the combination of inadequate torque and lack of resistance to forward and outward movement can generate a "wave" of belt that propagates along the helix. Similarly, if the infeed torque is too high, the belt will not easily collapse along the helical path to correctly engage the cage end cap features. Friction-driven spiral systems to not require torque motors but use standard speed motors instead.

In some spiral belt systems, the engagement between the cage bar end caps and the belt features is configured to permit belt travel around a cage drive with changing helical diameter, as with a tapered cage drive. This is known in the art as "beveling" or "tapering." Where the belt travels along a helical path starting from a larger radius that becomes progressively smaller until the belt exits the helix, belt tension is reduced along the helical path. This requires that the belt links entering the helix but not yet engaged with the cage drive must be capable of moving backwards relative to the cage because the helical radius is reducing until engagement occurs. Consequently, the outside cage bar design, in some embodiments, presents chamfers or fillets on a leading side, a trailing side or both the leading side and the trailing side of the cage bar or the cage bar cap, depending on the embodiment. The chambered side allows the belt to slip onto the drum outer boundary (cage bar or bar cap_ until link tabs or belt rod inner ends contact and engage the cap grooves to be positively driven at the drive-belt interaction and remain properly constrained to minimize forward or outward movement of the belt.

In some embodiments, the belt engages the cage drive end cap grooves by means of belt rod inner ends which may be either orthogonal or angled with respect to a direction line tangent to the helical path. Embodiments of the belt rod ends disclosed herein restrict forward and outward movement of the belt as it travels along the helical path by providing uniform positive drive engagement at each engagement point on the drum outer boundary. This allows higher drum rotation speed (revolutions per minute, or "rpm"), smoother operation, and the need for less precise control of inflow torque, outflow torque, and belt tension in general. In some embodiments disclosed herein, upward or downward belt movement with respect to the travel path is reduced if the belt rod inner edge becomes the engaging feature interacting with the cage bar or bar cap groove (configured as a groove or a slot feature). Contact surface area is reduced to a single line or points along a curved cage bar or bar cap in comparison with the extended flat-engagement surface of a protruding cage bar cap flap or tab feature disposed on a bar of bar cap, such as in prior art drum-belt spiral drive systems.

On friction-drive spiral systems, backward slippage between the gelt inner edges and cage bars, known as "overdrive," is desired and necessary for proper operation of the system. The friction drive system belt tension is much higher than a positive drive system wherein the belt is configured to engage with the cage bar feature.

In embodiments of the systems disclosed herein, use of a rho or psi-shaped link may create up to a 25% reduction in material costs to form the links because the rho and psi links are formed with only one leg, versus two legs of the U-shaped links currently used in the art. Use of one-legged links also reduces belt weight which in turn reduces energy costs to operate the system. In some embodiments, belt links having two legs may be used on the tensioned outer belt edge (larger outside radius of the helix) and links with only one leg may be used at the inside belt radius of the helix, where belt tension is essentially zero.

Belt slippage on a friction drive system moves the inner links of the belt with respect to adjacent links. If the belt path is along a larger curve radius, the inner links will move more if they are not fully collapsed and nested within one another because the links are designed to move through a shorter turn radius to be fully collapsed. Links moving to the smaller cage diameter tend to slide backwards with respect to the belt direction of travel to accommodate the shorter cage circumference. This is why embodiments utilizing a cage bar cap with a chamfered surface disposed at the leading edge of cage bar 212 or the bar cap is important-so that belt edge engagement feature (i.e., link tab or inner rod end, e.g.) does not get stuck on the leading edge of the cage bar cap before full engagement with cap groove 214 can occur on positive drive systems.

On friction drive systems, the friction between the drum outer boundary (cage bars or bar caps-and belt may vary due to contamination with dirt, oil, product, other residue, etc. Whether friction arising from such residue is increased or decreased, increased belt tension is generally results and can lead to failure. For example, if the cage drum driving the belt loses friction with the belt due to oil on the cage (the drum outer boundary), an outfeed motor that positively engages the belt with a sprocket will continue pulling on the belt with the same initial speed as before the oil condition. This will increase belt tension and possibly disengage or flip a belt in a friction-drive system. Consequently, some prior art frictional systems provide a smooth contact point between the drive cage drum and the belt to allow proper backwards slippage. Some designs accomplish this by creating a smooth protrusion leg on the belt link surface facing the cage drum. Others placed a large bend in the belt rod to create a smoother surface which could also have short periods of engagement assistance with features on the cage drum matching the bent belt inner rod ends, for example. Such systems provide a brief, low-grade mechanical engagement supplementing the friction drive to assist belt travel. More recent developments have been to employ a positive drive operation to increase the engagement period and avoid backward slippage between the belt and the cage drive, however current belt-cage interactions do not offer true engagement because they do not constrain forward or outward belt movement, although they may work well to prevent backward slippage.

Prior art belt designs for positive drive systems engage a drum rib (cage bar end cap) protruding from the cage surface to avoid backward slippage only. Belts can engage the caps by means of rod, tabs, or protruding legs extending radially toward the cage drum central axis of rotation, however as mentioned previously, these belt design still allow forward and outward radial movement of the belt. This is especially true if the cage bar becomes bent on larger systems or when an unbalance of forces arises during equipment operation.

Belts deviate from a helical path on positive drive systems for several reasons. This includes an increasing cage rotational speed, changing belt pitch, changes in ambient temperature, or increased friction from worn support rails. To avoid belt path deviation, the belt must be properly tensioned by a torque outfeed motor. Any lack of tension or rib deflection can disengage the belt because current designs to not provide for limiting radial belt movement though the engagement features. Current direct drive systems require precise output path torque control at which point the belt departs from the helix to prevent backward or outward radial belt displacement along the helical path. A better constrained belt/cage drive system will not require complex and precise infeed and outfeed tension controls. Decreased wear of the engaging surfaces between the belt and the cage drive elements from reduction of the outfeed and infeed tension will increase the useful life of the belt and the cage bar end caps.

The example embodiments disclosed herein restrict or remove backward or outward radial movement by means of a cage bar cap bearing a groove that interacts with a matching belt rod-end shape rather than engagement with belt clips or other means of engagement with other elements of the system. Belt clips are added to the bottom of the belt, for example, so the clips press against support rails, in some prior art systems. Embodiments disclosed herein, however, are simpler and more efficient. A belt clip solution is problematic because placing clips on either the inside (drive cage side) or outside of the belt prevents the operator from turning over the belt from time to time, as is needed to equalize the wear and "stretch" across belt components that arises from the large tension difference between the inner (driven) edge and the outer edge. Flipping the belt from time to time to equalize wear is the normal industry practice. Embodiments disclosed herein preserves belt symmetry and poses no problem for periodic flipping as part of regular, established practices employed throughout the industry for maintenance of a spiral conveyor belt system.

The prior art disclosed special link designs to create a smoother surface for cage contact, to engage with the cage drum on positive drive systems, and to provide a weld-free link by bending the rod terminal end. The link and cage bar cap embodiments disclosed herein are designed to create a truly positive engagement face with the cage drum on positive drive systems.

Embodiments of belt links and cage bar caps disclosed herein allow for a more compressed pitch between belt links traveling along the inner edge of a helical path. The system turn ratio of a positive drive system is typically 0.9 to 1.6 or higher, as mentioned previously. A spiral conveyor system having any helical path turn ratio of less than 1.6 requires a central row of links to keep the belt rods aligned, prevent twisting, and belt disengagement, in addition to the inner belt link row and the outer belt link row found on all belt systems, whether linear or helical, regardless of turning ratio. When compared with embodiments disclosed herein, grid and flex belt link designs known in the art will have a much smaller compressed pitch that makes the belt more rigid and prevents "play" along the inner edge of a spiral belt path. Some of embodiments of the spiral conveyer belt system disclosed herein allow for a larger compressed pitch that is intended to engage a cage bar cap groove feature to engage with a feature displayed by the belt inner edge wherein the belt can move up-and-down but not forward or radially outward. A spiral belt system design that allows the belt to move radially outward, forwards (in the direction of belt travel), or backwards is undesirable in a positive drive system, at least for the reasons already mentioned. Embodiments disclosed herein properly constrain the belt to the cage to stabilize the engagement, reduce product movement, provide smoother operation of the system, and increase the useful life of system components.

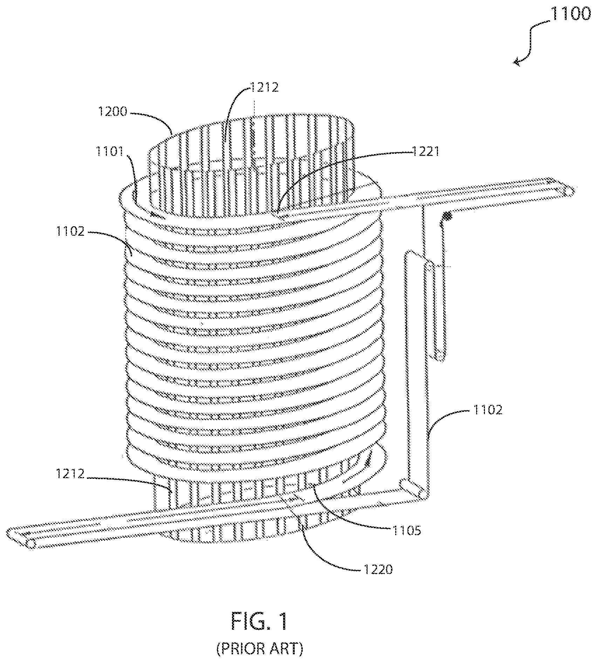

**FIG. 1** is a perspective view of an example prior art spiral conveyor system. **FIG. 1** shows prior art system 1100 comprising belt 1102 engaged with drum 1200 along helical path shown by the arrow labeled 1101. Engagement of belt 1102 with drum 1200 begins at infeed 1220 and terminates at outfeed 1221, as shown. The prior art system shown in FIG. 1 depicts aspects common to all spiral conveyor systems. The belt translates vertically along a helical path, moved by a rotating drum that engages with the belt at a plurality of locations where belt inner edge 1105 contacts cage bar 1212. Belt 1102 may be moved in either direction, as depicted by the arrows in **FIG. 1****,** depending on the direction of rotation of drum 1200. The example of cage drum 1200 shown in FIG. 1 has an ovoid cross section. In practice, existing drums may be circular, ovoid, or tapering in cross section, depending on the application wherein the spiral belt system is used. Accordingly, the embodiments disclosed herein are not intended to be limited to any particular drum shape and are offered by example only.

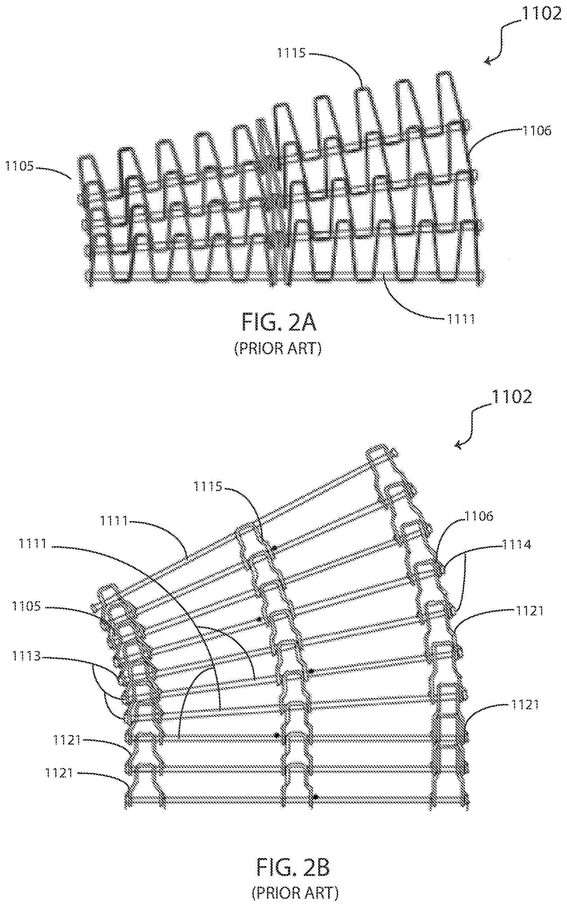

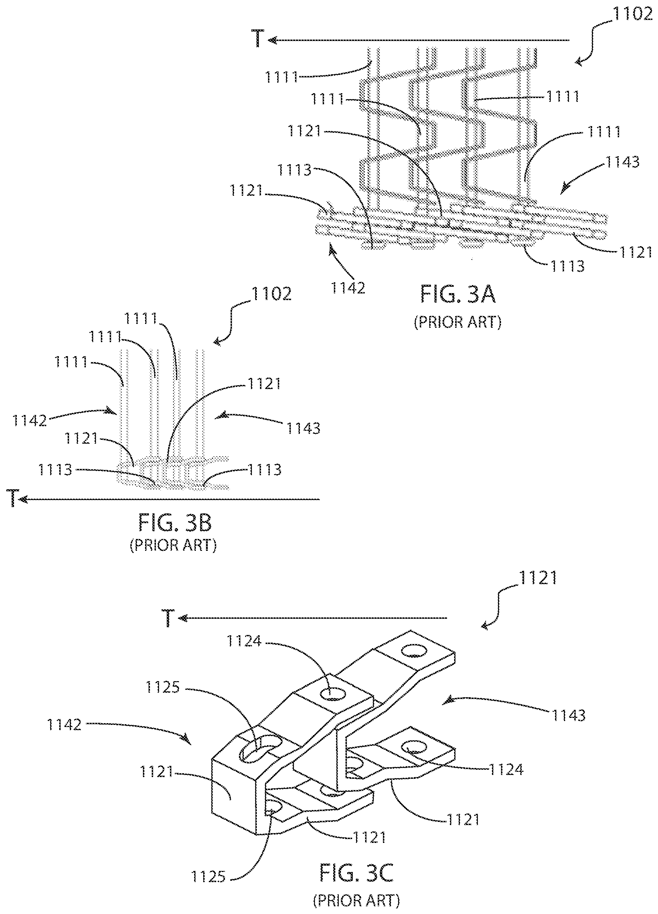

**FIGs. 2A-B** are top views of a portion of a prior art spiral conveyor belt comprised of U-links. **FIGs. 2A-B**show several linked segments of prior art belts 1100 in the two examples shown and are provided to illustrate the operation of spiral conveyor belts generally. Persons of skill will have knowledge of the prior art belt structure shown in **FIGs. 2A-B**and the functionality described below. The prior-art belt 1100 section in the examples shown is curved, as a spiral conveyor belt curves when travelling along a helical belt bath. Belt 1100 has an inner edge 1105 and an outer edge 1106 with respect to the curve of a helical belt path. The linked segments forming belt 1100 comprise a plurality of links 1105 coupled to rods 1121 such that each generally U-shaped link 1121 may rotate freely around each rod 1111. Additionally, each link 1121 may slide along a slot cutout within an arm of link 1121, not visible in these top views but shown in the perspective link view in **FIG. 3A** below. In the example shown in **FIG. 2B****.,** each link is coupled to two rods 1111. Each rod 1111 has an inner end 1113 and an outer end 1114, defined by whether the rod end travels along the inner curve radius or the outer curve radius of the helical path. As seen in FIG. 2B, inner ends 1113 are much closer together than outer ends 1114. Movement of inner rod ends 1113 closer together along the inner edge of a helical path is required to shorten the belt to accommodate the shorter length of an inside-radius belt circumference. The rods 1111 are slidably coupled to slots (not shown) formed in the links 1121 to allow shortening of the inner edge 105 following entry of the belt onto drum infeed 1220 and lengthening upon exit of the belt from the drum at outfeed 1221. The shortened inner edge 1105 having rod ends close together versus when a helical conveyor belt is moving along a straight path is also known as a "compressed pitch." Embodiments of the belts described herein make possible a longer compressed pitch, versus prior art belts, by virtue of belt link design.

**FIG. 3A** is a top view of a prior art small-radius grid-style spiral conveyor belt with links in a collapsed configuration. **FIG. 3B** is a top view of a prior art small radius flex-style spiral conveyor belt. **FIG. 3C** is an enlarged perspective view of a prior art U-link. **FIGs.** 3A**-C** show several examples of belts from the prior art to demonstrate the structure and certain functional elements of existing belt links. The belt links 1102 shown in **FIG. 3A** are plate links. The belt links 1102 shown in **FIG. 3B** are U-links from the prior art, details of which are shown in **FIG. 3C****.** Belt 1102 has a leading portion trailing portion with respect to a direction of travel indicated by arrow T. On examination, it is seen that belt rod inner ends 1113 are minimally separated from each other where coupled to links 1113. Inner end 1113 separation distance may vary due to the structure of links 1121.

As shown in **FIG. 3C****,** a prior art U-shaped link 1121 typically comprises at least one circular cutout 1124 and at least one slot cutout 1125. Each link 1121 is coupled to exactly two (2) rods 1111. Each rod 1111 is coupled to exactly two links 1121. A first rod 1111 pass through circular cutout 1141 of a leading link 1121 and slot cutout 1125 of trailing link. In this way, rod 1111 can move forward or backward with respect to the direction of travel T fixed to the leading link at circular cutout 1124 while free to slide along slot cutout 1125 of the trailing link. This allows the trailing link to move forward with respect to the leading link as the links move around a curved path. Rod ends 1113 move closer together as a length of belt 1102 enters the helical path and further apart configuration as belt 1102 exits the helical path by rod inner end 1113 sliding along slot cutout 1125 of the trailing link. In some embodiments of system 100, belt 102 is a "mixed-link" belt formed from links 121 having more than one overall shape or configuration.

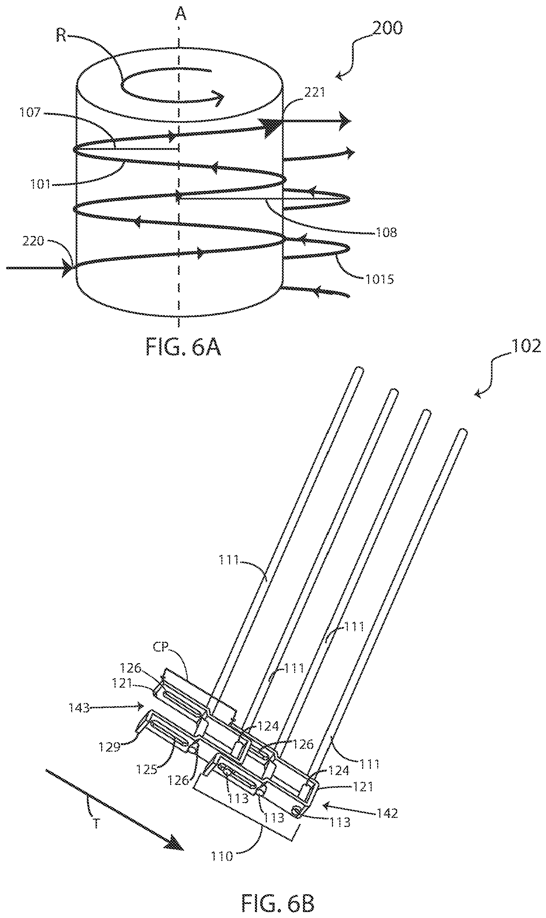

Increasing the compressed pitch-i.e., the distance between rod inner ends 1113 along the belt inner radius of a helical path-allows for a smaller inside radius (inside radius 107 shown in **FIG. 6A**). Embodiments of belt links discloses herein are configured to minimize the compressed pitch of a spiral conveyor belt.

### Three-Rod Belt Links; Rho Links

A compressed-pitch spiral belt may be configured to minimize the distance between belt rod ends along the inner edge of a helical path by coupling one link to three rods instead of the two-rod belt links from the prior art and discussed herein above. Belt links coupled to three belt rods per one link are shown and described in the figures below.

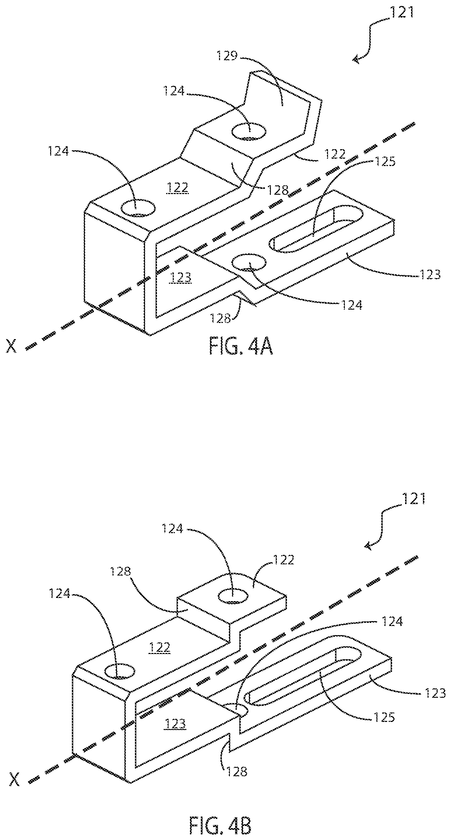

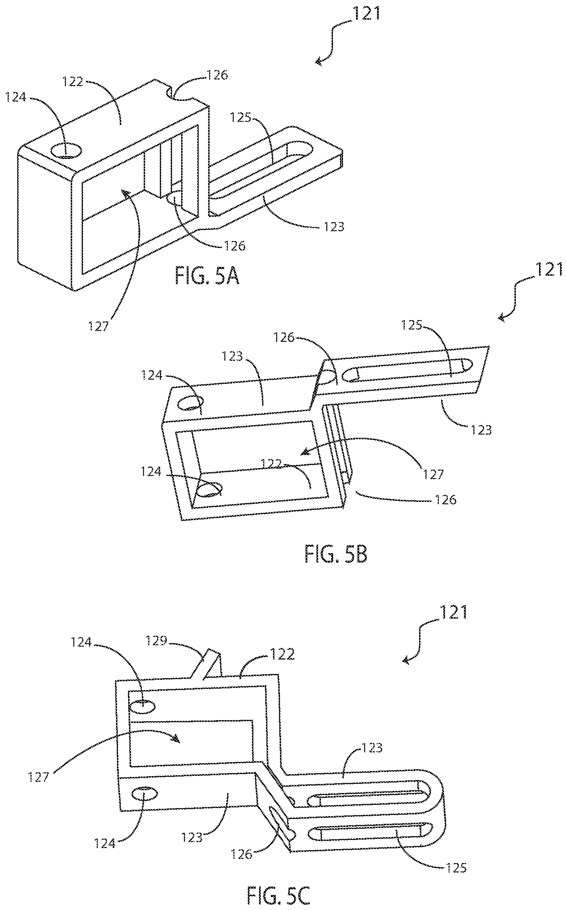

**FIGs. 4A-B** are perspective views of examples of a three-rod belt link. FIGs. 4A**-B**show embodiments of a belt link 121. Link 121 is a three-rod belt link configured to couple to three (3) belt support rods 111. Link 121, in some embodiments, is formed as a unitary body having an open shape (**FIGs. 4A-B,**et al.). In other embodiments, link 121 forms a closed shape 127 (i.e., as shown in **FIGs. 5A-C**et al.). Link 121 comprises a first leg 122 and a second leg 123 which may (but do not necessarily) include multiple sections joined at angles and which are generally parallel to one another along the link's overall length. First leg 122 may have a shorter overall length than second leg 123 wherein link 121 is a U-shaped three-rod link. Additionally, second leg 123 comprises a slot cutout 125 and first leg 122 does not. First leg 122 comprises two (2) circular cutouts 124. Second leg 123 comprises one circular cutout 124 and one slot cutout 125, as shown in **FIGs. 4A-B.**In some embodiments, link 121 includes two first legs 122, each leg 122 positioned opposite to a second leg 123. In some embodiments, link 121 includes a shoulder 128 along each of first leg 122 and second leg 123, as shown. Shoulder 128 increases the distance between leg 122 and leg 123 creating a larger space wherein adjacent links 121 may nest together. Example embodiments of a U-shaped link 121 are shown in FIGs. 4A-B, however other configurations of links 121 shaped in an open "U" are possible. In particular, circular cutouts 124 and slot cutout 125 may be spaced differently or placed in varying locations along first leg 122 and second leg 123, respectively. Spacing of circular cutouts 124 dictate whether the plurality of support rods 111 of assembled belt 102 are evenly spaced or unevenly spaced along the direction of travel. Shoulder 128 may be orthogonal (**FIG. 4B**) or non-orthogonal **FIG. 4A**) with respect to a long axis "X" of first leg 122 or second leg 123.

Links 121, a link 131, and/or a link 150 (links 131 and 150 are described herein below) are slidably and rotatably coupled to rod 111 at slot cutout 125. Links 121, a link 131, and/or a link 150 are only rotatably coupled to rod 111 at circular cutout 124 and semicircular cutout 126.

Link 121 may also comprise a tab 129 configured to engage a cage bar cap 213 of a belt drive drum 200. Engagement of tab 129 with cage bar cap 213 positioned on a rotating drum 200 moves belt 102 along the helical path. Although **FIG. 4A** shows tab 129 positioned proximate to an end of leg 122, this is by example and not meant to be limiting. In some embodiments, tab 120 is positioned at an end of leg 123. In some embodiments, tab 129 is positioned on a length of leg 122 or leg 123 removed from any leg end. In some embodiments, including that shown in FIG. 4A, tab 129 extends from leg 122 at a non-orthogonal angle. This is by example and not meant to be limiting. In some embodiments, tab extends orthogonal to leg 122 or leg 123. In some embodiments, tab 129 forms an angle less than about ninety degrees with leg 122 or leg 123. In some embodiments, including that shown in FIGs. 4A, tab 129 forms an angle greater than about ninety degrees with leg 122 or leg 123. In some embodiments, tabs 129 angled greater or less than ninety (90) degrees with first leg 122 or second leg 123 provide for more secure engagement and smoother coupling and decoupling at infeed 220 and outfeed 221, respectively. In some embodiments, such as shown in FIG. 4B and others, link 121 does not comprise tab 129.

Although belt links 121 shown in FIGs. **4A** 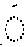 **-B** may appear similar to the prior art links 1121 discussed above, links 121 couple to three support rods each, versus two-rod coupling of the prior art 1121 links. For example, moving from left to right across each link 121 shown in **FIGs. 4A-B,**a rod 111 (not shown) couples to link 121 at a first pair of circular cutouts 124, a second rod 111 couples at a second pair of circular cutouts 124, and a third rod 111 couples at a single slot cutout 125, all with respect to a single link 121. This is discussed further below with respect to **FIG. 6****.**

**FIGs. 5A-C**are perspective views of example of a rho belt link. **FIGs. 5A-C** show link 121 having closed shape 127 from which leg 123 extends. First leg 122 forms one side of the four-sided closed shape 127 shown and second leg 123 forms a different side of closed shape 127 opposite first leg 122. First leg 122 comprises one circular cutout 124 and one semicircular cutout 126. Second leg 123 comprises one semicircular cutout 126 and one slot cutout 125. In the example embodiment shown in **FIG. 5C****,** second leg 123 is formed from two parallel segment, each bearing a slot cutout 125. In the example embodiments shown in **FIGs. 5A-B,**second leg 123 is single-walled. The example embodiment shown in **FIG. 5C** also shows tab 129 extending from first leg 122 at an angle less than ninety degrees. Each link 121 shown in **FIGs. 5A-B**is configured to couple to three rods 111. Moving from left to right, a first rod 111 passes through two circular cutouts 124, a second rod 111 passes through the semicircular cutouts 126, and a third rod 111 passes through slot cutout 125. The advantages over the prior art 2-rod links associated with three-rod coupling of each link 121 are explained in detail herein below.

**FIG. 6A** is a diagram of a drum in a spiral conveyor system moving a belt in a helical path. **FIG. 6A** shows a drum 200 surrounded by a helical path 101 diagramed by the curvilinear corkscrew-shaped arc with an arrow at the upper end. Helical path 101 represents any helical path traversed by belt 101 described herein. Helical path 101 has an inside radius 107 measured from a central axis of rotation "A" and is traversed by an inner edge 105 of belt 102. Helical path 1015 has an outside radius 108 measured from central axis of rotation A and is traversed by an outer edge 106 of belt 102. Outside radius 108 is larger than inside radius 107 for all belts 102 moving along helical path 101/1015. Drum 200 rotates in the direction "R" as shown in **FIG. 6A****,** in some embodiments. In some embodiments, R is a counterclockwise rotation. In some embodiments, R is a clockwise rotation. In some embodiments, including that shown in **FIG. 6A****,** helical path 101 moves from bottom to top, wherein belt 102 contacts a drum 200 at an infeed 220 at the lower end of path 101 and ends contact with drum 200 at an outfeed 221 at the upper end of path 101. In some embodiments, helical path 101 moves from top to bottom, wherein belt 102 contacts a drum 200 at the upper end of path 101 and ends contact with drum 200 at the lower end of path 101. In system 100, rotation of drum 200 causes motion of belt 102 along helical path 101 beginning at infeed 220 and ending at outfeed 221.

**FIG. 6B** is a perspective view of a length of belt. **FIG. 6B** shows coupling of two open-shape links 121, similar to the open-shape links 121 shown in **FIGs. 4****-A-B.** For a belt 102 that is moving in a direction of travel "T," links 121 are designated as a leading link 142 and a trailing link 143 in relation to one another and with respect to the direction of travel T of belt 102. A plurality of links 121 are coupled together by rods 111 to form a complete belt 102. For a "3-rod link" belt, a belt segment 110 comprises one complete link 121 coupled at inner end 113 and outer end 114 (not shown) to three rods 111; i.e., a total of two links 121 coupled to inner ends 113 and outer ends 114 of three rods 111 per segment 110. A prior art "2-rod link" belt segment has one complete link coupled to the inner and outer ends of two rods; i.e., two links and only two rods per segment.

**FIG. 6B** also shows two links 121 and four rods 111 forming one complete segment 110. Each link 121 is coupled to three rods 111 at an inner end 111 of rod 111. Each inner end 113, however, is coupled to either two links 121 or one link 121. For example, rod 111 passing through the middle set of semicircular cutouts 126 on link 121 pass only through that single link. Rod 111 passing through either the set of circular cutouts 125 set of slot cutouts 125, however, is couple to two links 121-a trailing link and a leading link with respect to a direction of travel of belt 102 marked by arrow "T" in **FIG. 6B****.** Link 121 may rotate around a central axis of rod 111 where coupled at any of circular cutout 124, semicircular cutout 126, or slot cutout 125. In addition, rod 111 coupled at slot cutout 126 allow link 121 to translate (slide) along the direction of travel, whether forward or backward with respect to link 121 of the adjoining segment 110. It will be apparent upon examination of FIG. 6 that slidable coupling of link 121 to rod 111 at slot cutout 125 allows two adjacent inner rod ends 113 to move more closely together along an inside radius 107 of belt 102 moving along helical path 101 while an outer end 114 of the rods 111 may stay separated to allow for the longer distance traveled by an outer edge 106 with respect to inner edge 105 as belt 102 moves around helical path 101. This movement of inner rod ends 113 closely together around a turning path exemplifies a compressed pitch.

### Plate Links and Psi Belts

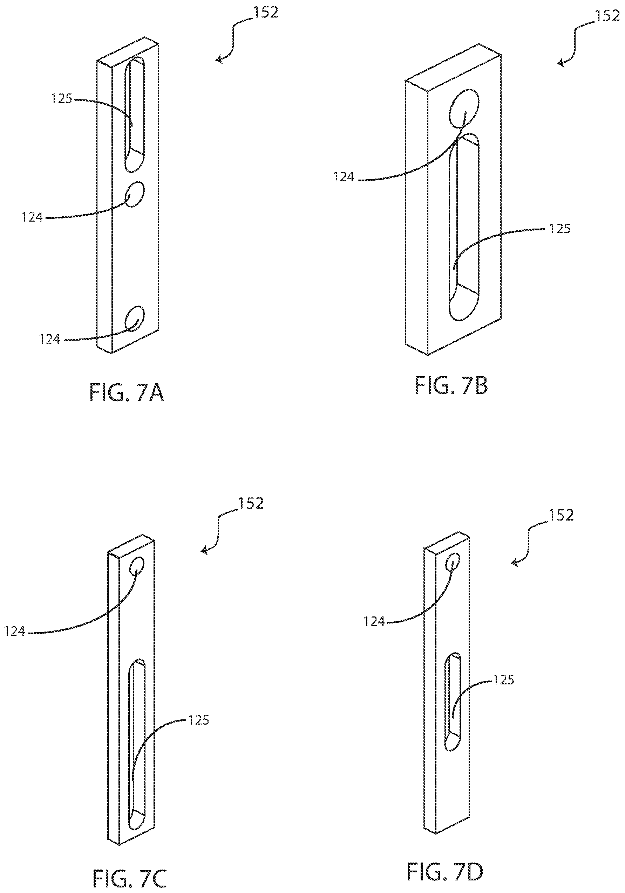

**FIGs.7A-D**are example embodiments of psi link components. **FIGs.7A-D**show separate embodiments of an inner portion 152 of a psi link 150. Inner portion 152 comprises at least one circular cutout 125 and one slot cutout 124. Slot cutout 124 allows inner end 113 of rod 111 coupled to inner portion 152 to slide forward or backward within the confines of cutout 124 as inner edge 105 of belt 102 moves along helical path 101. The sliding movement of inner end 113 creates the compressed pitch. In some embodiments, two rods 111 are coupled to each inner portion 152. In some embodiments, three rods 111 are coupled to each inner portion 152. FIG. 7A is an example of a "three-rod" psi link 150 wherein three rods 111 are coupled to each inner portion 152. FIGs. 7B-D show examples of a "two-rod" psi link 150 wherein two rods 111 are coupled to each inner portion 152.

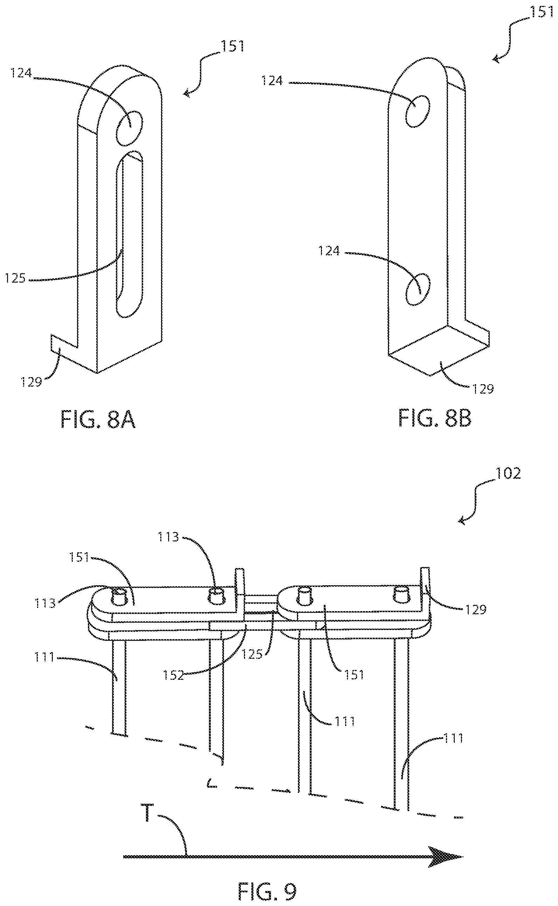

**FIGs. 8A-B** are additional example embodiments of psi link components. **FIGs. 8A-B** show separate embodiments of an outer portion 151 of psi link 150. In some embodiments, such as that shown in **FIG. 8A****,** outer portion 151 comprises one circular cutout 124 and one slot cutout 125. In some embodiments, shush as that shown in **FIG. 8B****,** outer portion 151 comprises two circular cutouts 124 only and not slot cutout 125. In some embodiments, outer portion 151 additionally comprises tab 129 for engaging with a cage bar cap 213 of cage 210 on drum 200.

As with the U-links 121 and rho links 131 discussed herein, variations in the placement and configuration of circular cutout(s) 124 and slot cutout 125 on plate links is within the scope of these disclosures.

**FIG. 9** is a diagram of a section of a spiral conveyor belt formed from psi links. **FIG. 9** shows a complete link 102 formed as a psi link comprises two outer portions 151 and one inner portion 152. Each end of inner portion 153 is sandwiched between two outer portions 151 and is configured to slide between outer portions 151 forwards or backwards along the direction of belt travel T.. Each sequential link 102 is coupled to the preceding link 102 an end of inner portion 152 sandwiched between two outer portions 151, as shown in **FIG. 9****.** The example shown in FIG. 9 is a "two-rod" link, as discussed above. Movement of rods 111 coupled within a single slot cutout 125 together as inner edge 105 of belt 102 moves along helical path 101 creates a compressed pitch. In the example shown, the middle two rods 111 depicted in FIG. 9 may move closer together until tab 129 contacts the nearest edges of the adjoining outer links 151. The degree to which rods 111 move closer together in this example, i.e., the compressed pitch, is determined, et al., by the length of sloth cutout 126 of either inner portion 152 or outer portion 151, depending upon where slot cutout 124 is disposed in any particular embodiment.

Ther presence of tab 129 at a leading end of each link 102 provides for drum 200 (not shown) to engage with belt 102, moving belt 102 along the direction of travel T, as shown in **FIG. 9****.** Various embodiments of system 100 employing different interactions between drum 200 and belt links 121 is discussed in considerable detail below.

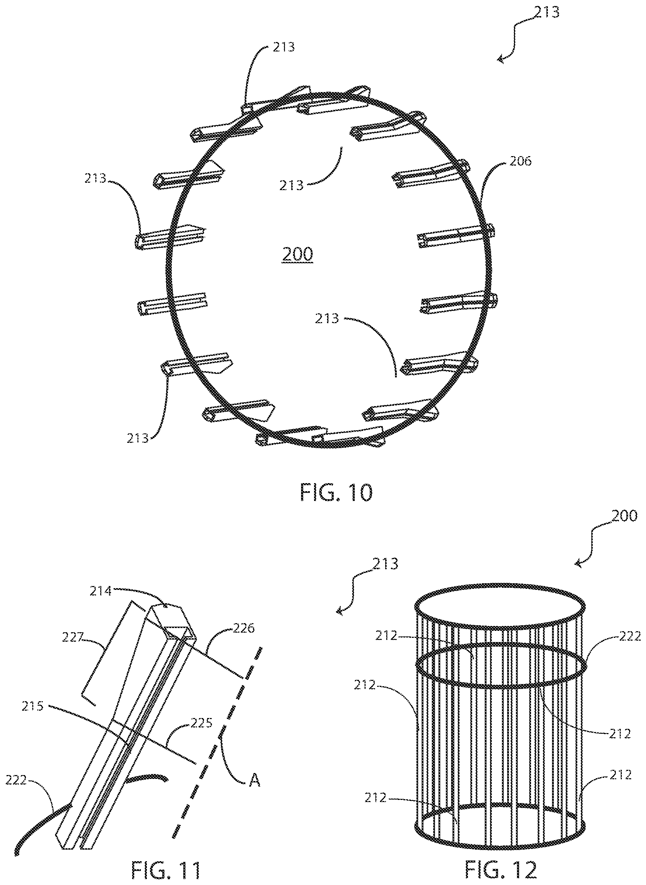

**FIG. 10** is a perspective illustration of a group of tapered cage bar caps disposed around a perimeter of a drive drum. **FIG. 10** shows a plurality of cage bar caps 213 in a circular arrangement, each as they would be mounted on a cage bar 212 of drum 200, in some embodiments. An outer boundary 206 of drum 200 is shown and is defined by the outermost surfaces of the plurality of bar caps 213. Bar caps 213 are considered a substructure of drum 200.

**FIG. 11** is a perspective view of a tapered cage bar cap. **FIG. 11** shows bar cap 213 comprises a cap groove 214 disposed opposite a bar couple 215. In some embodiments, including that shown in FIG. 11, bar cap 2113 comprises a ramp 227. Ramp 227 enlarges from a first radius 225 to a longer, second radius 116. First radius 225 is defined as the linear distance from the ramp surface bearing cap groove 214 at the narrowest point of ramp 227 to drum central longitudinal axis of rotation "A." Second radius 226 is defined as the linear distance from the ramp surface bearing cap groove 214 at the widest point of ramp 227 to drum central longitudinal axis of rotation "A". In some embodiments, cap groove 214 comprises edges orthogonal to cage bar 212. In some embodiments, cap grove 214 comprises chambered edges to facilitate smooth engagement and disengagement of features disposed along inner edge 105 of belt 102. The chamfered edges are angled outwards towards belt inner edge 105, in some embodiments. In some embodiments, the chamfered edges are angled inward toward belt inner edge 105. Each bar couple 215 is configured to mount onto a cage bar 212 (see **FIG. 12** below). **FIG. 11** additionally shows a cage ring 222 contacting tapered cage bar cap 213 at a vertical offload point on drum 200, above where belt 102 is not engaged with bar caps 213. Cage ring 222, in some embodiments, is coupled to a recessed area on bar cap 213. Cap groove 214 (not shown) terminates at ring 222. Where a drum coupling feature disposed on belt 201-such as tab 129, rod inner end 113, or similar feature-contacts ring 222, belt 201 uncouples from drum 200. Ring 222 is disposed on drum 200 at outfeed 221 to facilitate a smooth uncoupling of belt 102 from drum 200, in some embodiments. Ring 222 is configured and positioned on drum 200 to prevent a jarring engagement or disengagement of belt 102 from drum 200.

In some embodiments, cap groove 214 is lined with a material different from a primary material forming the structure of bar cap 213. In some embodiments, cap grove 214 is lined with polytetrafluoroethylene ("PTFE" or "Teflon").

**FIGs. 10-11** illustrate certain embodiments of system 100 wherein drum 200 is configured to couple ad infeed 220 and uncouple at outfeed 221 as inner edge 104 of belt 102 travels up or down the bevel seen in bar cap 213 shown in these two figures, and in some other embodiments. As inner edge 104 travels along the bevel, belt 102 progressively rather than abruptly engages with drum 200, allowing for a gradual transmission of a belt-propulsive force from drum 200 to belt 102. Consequently, embodiments of system 100 utilizing beveled bar caps 213 as shown in **FIGs. 10-11** are more stable, wherein belt 102 is better constrained and less prone to uncontrollably disengage from drum 200 causing product loss and catastrophic failure of system 100.

**FIG. 12** is a perspective view of a drum of a spiral conveyor system. **FIG. 12** shows drum 200 having an array of bars 121 forming a structure with the appearance of cylindrical cage, in some embodiments. Accordingly, such embodiments of drum 200 are also referred to as a "cage drum" and bar 212 is also referred to as a "cage bar." In some embodiments, an elongate bar cap 213 (omitted for clarity and not shown in **FIG. 12**) is coupled to each cage bar 212 providing a feature for interacting with inner edge 105 of belt 102, such as a cap groove 214, for example. Cage ring 222 is also shown, disposed around drum 200 encircling bar caps 213 at the level of belt outfeed 221 to facilitate smooth uncoupling of belt 102 from drum 200.

In the embodiments shown in **FIGs. 10-12****,** belt 201 moves up or down drum 200 contacting the tapered bar cap 213 along belt inner edge 105. Helical path 101 is traced as belt 102 wraps around drum 200 in multiple levels or tiers stacked upon one another, such as can be seen in **FIG. 1****,** for example. Embodiments of system 100 incorporating the tapered bar cap 213 (shown in **FIG. 10****,** e.g.) comprise a changing inside radius 107 from tier-to-tier across drum 200 created by the tapered outer surface of bar cap 213. Radius 107 may decrease across the belt 102 tiers from bottom to top of drum 200, in some embodiments. In other embodiments, radius 107 may increase across the belt 102 tiers from bottom to top of drum 200.

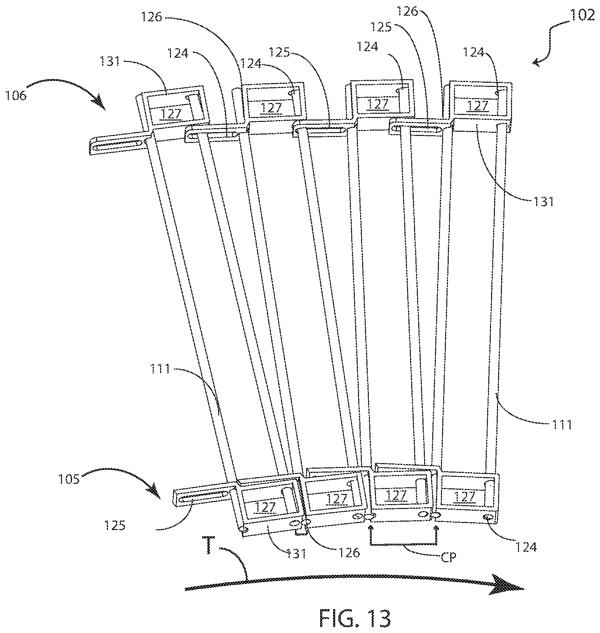

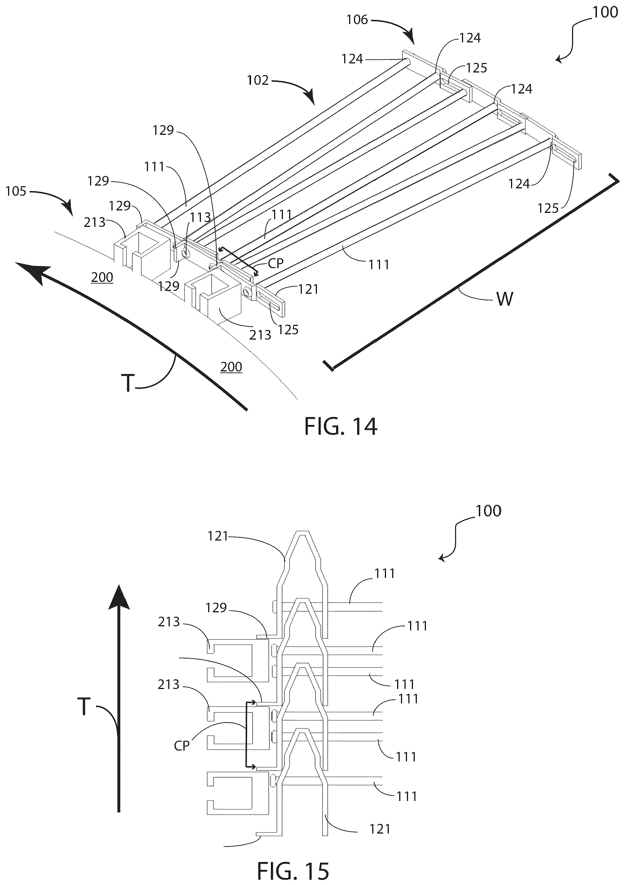

**FIG. 13** is a top-view of a section of a rho-link spiral conveyor grid belt collapsing on a curve. **FIG. 13** shows belt 102 moving along a helical path with a direction of travel "T" shown by the dark arrow. A series of rho links 131 are shown along an inner edge 105 of belt 102 with a corresponding series of rho links 131 along an outer edge 106 of belt 102. Examination of **FIG. 13** reveals that each rho link 131 is coupled to three rods 111; i.e., each rho link 131 is a "three-rod link" in this, and in some other embodiments. It can also be seen that the closed shapes 127 of the plurality of rho links 131 along inner edge 105 of belt 102 are positioned close together and closed shapes 127 of the corresponding plurality of rho links 131 along outer edge 106 of belt 102 are spaced further apart. The compressed pitch CP is shown by FIG. 13 and defined as the shortest linear distance between the center of two adjacent rod inner ends 113 along inner edge 105 of belt 102. A "compressed pitch belt" comprises belt 102 having a width (see FIG. 14 below) divided by the compressed pitch CP equal to less than 1.6. Differential spacing of rod inner ends 113 of adjacent rods spacing between inner edge 105 (compressed pitch "CP") and rod outer edges 106 is necessary for belt 102 to move along helical path 101 wherein inner edge 105 path length is shorter than outer edge 106 path length. Moreover, when belt 102 disengages from drum 200 at outfeed 221, belt 102 typically moves in a linear path wherein inner edge 105 and outer edge 106 link separation distances are essentially equal. Movement of adjoining links 121, including rho links 131 and psi links 150, with respect to one another is enabled by semicircular cutout 126, as can be seen through examination of **FIG. 13** and the several drawing figures. The shorter the distance of compressed pitch CP, a smaller radius of helical path 101 is possible, wherein system 100 occupies a smaller footprint on a floor or other supporting surface, increasing efficiency of system 100. By allowing increased motion of adjoining rods 111 and links 121, a belt system 100 with a small, compressed pitch reduces compressive forces along inner edge 103 of belt 102 which can cause belt 102 to buckle or separate from drum 200, possibly causing catastrophic failure of the spiral conveyor system.

Embodiments of belt 102 presented herein are collapsible positive driven belts for helical conveyor systems, including system 100 and some existing systems. The belts are formed from metal or metal alloys and are oriented generally orthogonal to an outer surface of a drum, a cage drum, or outer surfaces of a plurality of cage bar caps 213 coupled to bars 212 of a cage drum 200. Links 121, 131, and/or 150 of belt 201 having at least one slot cutout 125 to allow movement of links 121, 131, and/or 150 with respect to adjacent links such that belt 102 may "collapse" along inner edge 105 moving along helical path 101 having inside radius 107. This collapsibility allows belt 201 to wrap around a curved drum 200 outer surface to drive belt 201 forward without generating distorting forces across belt 201 tending to buckle and uncouple belt 102 from drive drum 200, as discussed at length herein. Stated in another way, when belt 102 enters a curve, the linear distance between links along outer edge 106 expands while the linear distance between links along inner edge 105 shortens. In some embodiments, rods 111 are overlain with a wire mesh (not shown), individual sections of which are also configured to expand or shorten, depending on the section of overlay along the curved belt path. Furthermore, the design of rho links 131 disclosed herein provides for

Although the concept of compressed pitch is discussed with reference to **FIG. 13****,** this is to illustrate an example and not meant to be limiting. Long-rod links, psi links, and three-rod U-links may also be configured to facilitate a smaller compressed pitch of belt 102 within system 100.

**FIG. 14** is a top-perspective view of a rod-link spiral conveyor belt collapsing on a curve. **FIG. 14** shows belt 102 moving along a helical path with a direction of travel "T" shown by the dark arrow. A series of links 121 are shown along an inner edge 105 of belt 102 with a corresponding series of links 121 along an outer edge 106 of belt 102. Each link 121 comprises two circular cutouts 124 and one slot cutout 125 and is coupled to three rods 111. Compressed pitch is not labeled on **FIG. 14****,** however examination shows that the rod links 121 along inner edge 105 overlap each other substantially more than the corresponding rod links 121 along outer edge 106. This allow adjacent rod inner ends 113 to be disposed very close together along inner edge 105, as suggested by examination of the figure. A belt width "W" is the shortest total linear distance from the innermost portion of inner edge 105 and the outermost portion of outer edge 106. Also shown in **FIG. 14** are cage bar caps 213 along drum 200. Each bar cap 213 interacts with link 121 along inner edge 105 at tap 129 on link 121, thus moving belt 102 along direction of travel T. In the embodiment shown in **FIG. 14****,** and in some other embodiments, every other tab 129 interacts with a bar cap 213. Note that the cage bars 212 of drum 200 are not shown, being omitted for clarity.

**FIG. 15** is a top view of a "three-rod" U-link spiral conveyor belt interacting with a series of cage bar caps. **FIG. 15** shows an additional embodiment of a "compressed-pitch" belt with "three-rod" links wherein each link 121 is a U-link. Each U-link 213 in this example embodiment is coupled to three (3) rods 111. In some embodiments, link 121 comprises tab 129 configured to engage with bar cap 213, as shown. Additionally, note that the plurality of links 121 shown in **FIG. 15** are maximally compressed wherein every other rod 111 is proximate to an adjacent rod 111 at a compressed pitch. Cage bars 212 of drum 200 are omitted from **FIG. 15** for clarity.

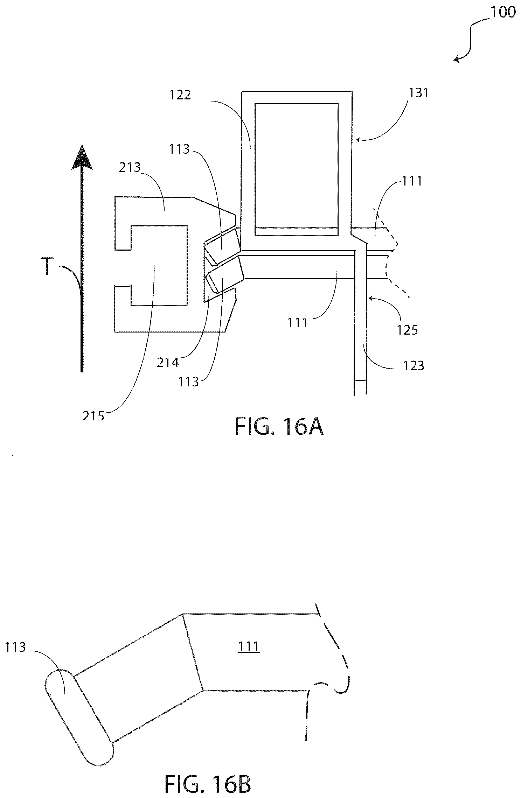

**FIG. 16A** is an enlarged view of a bent-rod belt interacting with a cage bar cap. **FIG. 16A** shows rho link 131 coupled to two rods 111 at rod inner ends 113. As shown in the figure, each rod 111 has a bent inner rod end 113. Bar cap 213, in this and some other embodiments, comprises a cap groove 214 with sloping sides angled to match the bent rod inner ends 113. The non-orthogonal coupling between bar cap 213 and rod inner ends 113, in some embodiments, has been found to facilitate smoother coupling and uncoupling between belt 102 and drum 200 at infeed 220 and outfeed 221, respectively. Also shown in **FIG. 16A** is the location of slot cutout 125 in second leg 123 of rho link 131. First leg 122 comprises a circular cutout 124 and a semicircular cutout 126 (not shown in **FIG. 16A**).

**FIG. 16B** is an enlarged view of a bent rod inner end. **FIG. 16** **B** shows inner end 113 of rod 111 wherein inner end 113 comprises a button-like shape. In some embodiments, an enlargement of inner end 113, such as shaped like a button, a mushroom cap, or similar shape, facilitates smooth and secure coupling and uncoupling of belt 102 from bar cap 213 of drum 200.

### Cage Bar Caps

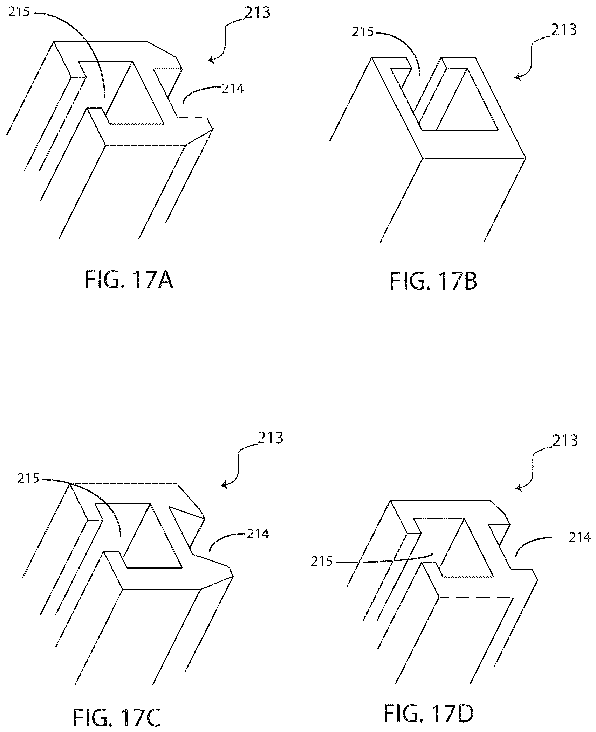

**FIGs. 17A-D** are diagrams of sections of cage bar caps. **FIGs. 17A-D** show different shapes and configurations of cap groove 214. As shown in FIG. 16 above, bar cap 213 may be configured to interact with inner edge 105 of belt 102 in different ways. Spiral conveyor system 100 is driven by friction or positive mechanical engagement between drum 200 and belt 102. **FIG. 17A** shows bar cap 213 having cap groove 214 configured to receive a straight red inner end 113 generally orthogonal to bar couple 215. Bar couple 215 is a recess comprised by bar cap 213 to receive cage bar 212 (shown in **FIG. 12****,** e.g.). **FIG. 17D** shows a similar configuration where cap groove 214 is generally orthogonal but shallower. A shallower orthogonal cap groove 214 is suited to interact with links 121 at tab 129, in some embodiments of system 100. **FIG. 17C** shows bar cap 213 having a non-orthogonal cap groove 214, similar to that shown in **FIG. 16****.** Non-orthogonal cap groove 214 is suitable to interact with angled rod inner ends 113 or an angled tab 219, in some embodiments. Finally, **FIG. 17B** has no cap groove 214 and merely presents a smooth surface opposite bar couple 215 and facing inner edge 105 of belt 102. Embodiments of system 100 comprising bar caps 213 lacking cap groove 214 similar to that shown in **FIG. 17B** frictionally interact with rod inner ends 113 of belt 102 to translate belt 102 along helical path 101.

Drum 200 may be rotated using any method known in the mechanical arts. Example include a motor drive coupled to drum 200, either directly or through a transmission. The motor drive is an electric motor, in some embodiments. In some embodiments, the motor drive is an internal combustion engine. Drum 200 comprises an internal structure (not shown) known in the art, such as a central shaft extending along a central longitudinal axis of rotation from which a plurality of supporting struts extend radially outward to support an outer skin or other structure to which the plurality of cage bars 212 are coupled. The outer skin may be a continuous surface or a discontinuous cage-like surface, in some embodiments.

In some embodiments, belt 102 is driven by a drive member (not shown) that transmits force to belt 102 at a location removed from drum 200, wherein drum 200 directs belt 102 along helical path 101 in a passive manner without transferring a motive force to belt 102. This may include "pulling" belt along a belt path at a location removed and separate from drum 200. Some non-limiting examples of drive members include sprockets of various shapes configured to interact with links 121, 131, and/or 150, or configured to interact with rods 111 or an overlying mesh coupled to rods 111, in some embodiments. The drive member may interact with belt 102 at the inner edge 105 or the outer edge 106, although the interaction may occur at a location on the belt path where the belt travels in a generally straight path rather than around helical path 101 or other non-linear curved path. The drive member may be driven by a motor, such as an electric motor, an internal combustion engine, or other power source suitable for the application. In some embodiments, the motor may be a constant torque motor such that a tension across belt 102 may be controlled within a desired range. In some embodiments, a weighted take-up roller (not shown) may be provided to assist in maintaining the belt tension and to reduce any belt slack within system 100. Controlling and maintaining optimal belt tension helps maintain stable engagement between belt 102 and drum 200, prevent belt "flip-up" and other forms of belt disengagement, and to eliminate or minimize destabilizing vibrations at infeed 220 and outfeed 221.

### Ribless Cage Drums

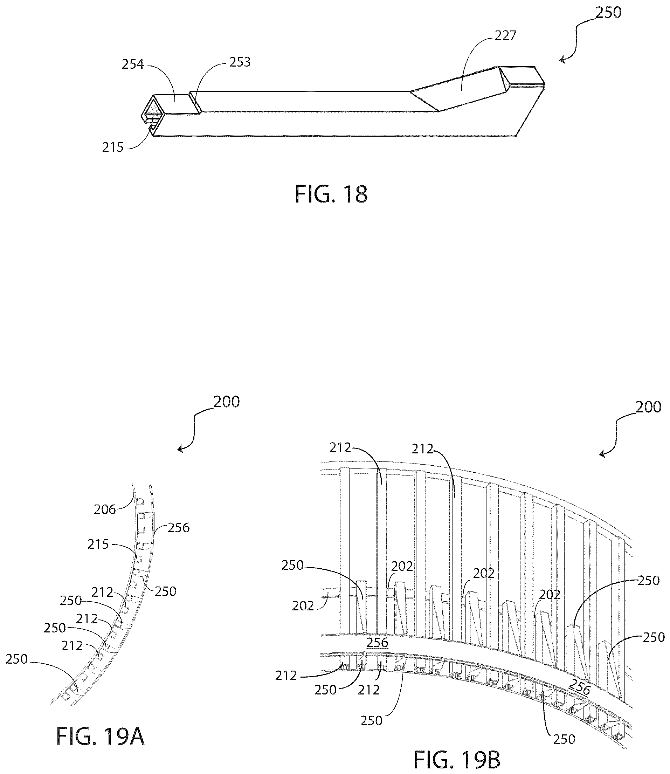

Ribless cage drums are discussed herein above prior to introducing the detailed description of the drawing figures. **FIGs. 18-22B** illustrate certain important elements of ribless cage drums as described earlier herein. In some embodiments, ribless cage drums comprise a transition element to facilitate onboarding, i.e., engagement of belt 102 with drum 200 at infeed 220; and offboarding, i.e., disengagement of belt 102 from drum at outfeed 221. As shown in the various drawing figures herein, onboarding occurs at a lower aspect of drum 200, in some embodiments. "Lower" means closer to the lowest aspect of outer boundary 206 of drum 200 with reference to the floor or other drum supporting surface. "Upper" means closer to the uppermost aspect of outer boundary 206 of drum 200 with reference to the floor or other drum supporting surface. With this relationship in mind, in some embodiments of system 100, infeed 220 is lower on drum outer boundary 206 then outfeed 211. Product resting on belt 102 will move upward along helical path 101 in these embodiments. An example of such an embodiment is shown in **FIG. 6A****.** In some embodiments, infeed 220 is higher on drum outer boundary 206 than outfeed 211; i.e., outfeed 221 is lower than infeed 220, wherein product resting on belt 102 moves downward along helical path 101 (not shown).

Ribless drive systems are facilitated by elements mounted at drum outer boundary 206 to facilitate onboarding and offboarding of belt 102 components engaging and disengaging respectively with outer boundary 206, such as belt support rod inner end 111 or belt link tab 129, in some embodiments. Consequently, system 100 comprising a ribless drum cage additionally comprises transition elements, such as an entrance ring and/or an exit ring, at points along drum outer boundary 206 vertically separated from one another to allow smooth onboarding of belt 102 at infeed 220 and, correspondingly, urging belt 201 away from cage 210 at outfeed 221.

**FIGs. 18** is a perspective view of a ribless transition element. **FIG. 18** shows a ribless transition element 250 having bar couple 215 for mounting on a cage bar 212 (not shown). In some embodiment, cage bar 212 is formed as ribless transition element 250 and does not require coupling to an underlying cage bar 212. In some embodiments, including that shown in **FIG. 18****,** ribless transition element 250 is coupled to cage bar 212 at bar couple 215. Transition element 250, in some embodiments, does not have a cap groove 214. In some embodiments, transition element 250 comprises cap groove 214. Transition element 210 is formed with a ramp 227 that is chamfered; i.e., not parallel with any other surface of element 250, as shown in FIG. 18. Chamfering of ramp 227 allows distribution of belt tension along belt inner edge 105 as belt 102 transitions onto drum outer boundary 206 formed at least in part by a plurality of transition elements 250. An edge chamfer 255 may be formed onto transition element 250, cage bar 212, bar cap 213, entrance ring 256, exit ring 257, or other surface of a component disposed on drum 200 to urge and facilitate engagement with disengagement from , or both engagement and disengagement of belt 102 from drum 200. In some embodiments, ramp 227 and chamfer 255 are formed from cage bar 212 directly rather than comprised by bar cap 213. For example, in some embodiments of system 100, there are no bar caps 213 and belt 102 interacts solely with the plurality of cage bars 210 at features formed by bars 210 (including, in some embodiments, ramps 227 and edge chamfers 255, e.g.). Element 250 also comprises a ledge 253 bounding a recess 254, wherein an entrance ring 256 may be mounted, in some embodiments. In some embodiments, chamfer 255 is disposed on an exit ring 257. In some embodiments, exit ring 257 and/or entrance ring 256, separately or in any combination, couple directly to cage bar 212.

Many configurations of chamfer 255 are within the scope of the disclosures found herein. For example, in some embodiments, chamfer 255 has the same width of transition element 250 or cage bar 212. In some embodiments, chamfer 255 tapers to a radius smaller than the drum 200 radius. In some embodiments, chamfer 255 does not extend to outfeed 221. In some embodiments, chamfer 255 is formed from a different material than cage bar 212; for example, bar 212 is formed from steel, other metal, or metal alloy, and chamfer 255 is formed from a plastic polymer. In some embodiments, transition element 250 is formed entirely from a plastic polymer. In some embodiments, the plastic is nylon. In some embodiments, the plastic polymer is polyethylene. In some embodiments, transition element 250 is coupled directly to an entrance ring 256, an exit ring 257, or both entrance ring 256 and exit ring 257. A plurality of transition elements 255 disposed around the periphery of drum 200 may be spaced at a distance equal to or slightly less than a compressed pitch at belt inner edge 105 to facilitate transfer of belt 102 from transition element 250 onto cage bar 212, in some embodiments. In some embodiments, transition element 250 may engage with and drive belt 102 at a different link tab 129 or rod inner end 113 than a different link tab 129 or rod inner end 113 driven by an adjacent cage bar 212. In some embodiments, exit ring 257 is formed in segments positioned on drum 200 between adjacent cage bars 212, bar caps 213, or transition elements 250, alone or in any combination without limitation.

In some embodiments, any one or more of transition element 250, cage bar 212, and/or bar cap 213 presents a generally planar surface lacking any belt engagement features such as a groove, a rib, or other protrusion toward belt 102. In some embodiments, spacing between cage bars 212, bar caps 213, or other adjacent belt driving elements disposed on drum 200 and forming outer boundary 206 are configured to provide vertical support to belt 201. In some embodiments, belt 102 moving along helical path 101 upon drum 200 fitted with transition elements 250 may comprise tab 129 or other drum engagement feature wherein spacing between adjacent belt drive elements is increased by using one or more links lacking tab 129 or other element for engaging with drum 200.

In some embodiments, an exit ring 257 is positioned at a larger drum radius than a plurality of cage bars 212 and configured to urge disengagement of belt 102 from cage bars 212. In some embodiments, exit ring 257 comprises an edge chamfer 255.

**FIGs. 19A** is a top cutaway view of an arc of a drum having ribless transition elements alternating with cage bar caps. **FIG. 19A** shows drum 200 having a plurality of cage bars 212 disposed around an arc at outer boundary 206 of drum 200 alternating 1:1 with a corresponding plurality of ribless transition elements 250. In some embodiments, ribless transition elements 250 are coupled to cage bars 212 at a bar couple 215. An entrance rind 256 is shown coupled to the plurality of transition elements 250.

**FIG. 19B** is a perspective sectional view of an arc of a drum having ribless transition elements alternating with cage bar caps. **FIG. 19B** shows drum 200 comprising a plurality of cage bars 212 disposed around an arc at outer boundary 206 of drum 200 alternating 1:1 with a corresponding plurality of ribless transition elements 250. Entrance ring 256 is shown coupled to the plurality of transition elements 250 in a position whereupon belt 102 reaches infeed 220 (not shown) transitions into engagement with drum 200.

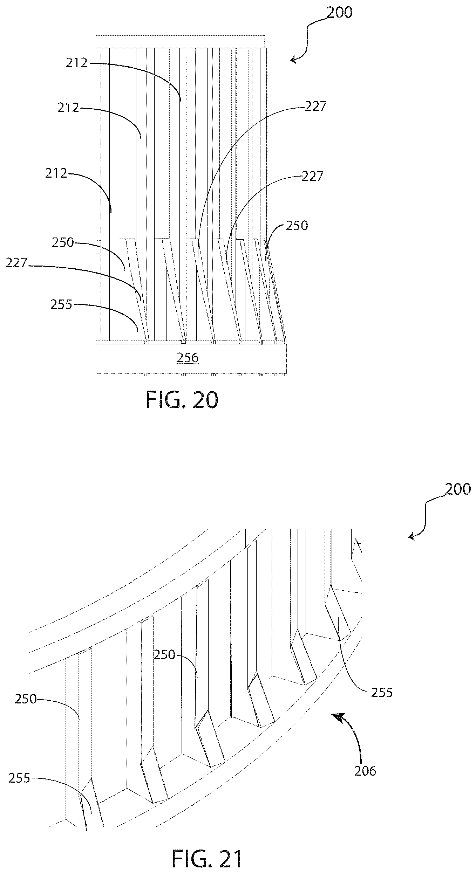

**FIG. 20** is a side view of an arc of a drum having ribless transition elements alternating with cage bar caps. **FIG. 20** shows a plurality of ribless transition elements 250 coupled to a corresponding plurality of cage bars 212 disposed around and forming outer boundary 206 (not shown in **FIG. 20**) of drum 200. FIG. 20 additional shows entrance ring 256 coupled to the plurality of transition elements 250 within recesses 254 (obscured by ring 256). Also shown are ramps 227 of transition elements 250. In some embodiments, such as the example shown in **FIG. 20****,** edge chamber 255 is disposed alongside and contiguous with ramp 227. In some embodiments, ramp 227 extends a greater length along transition element 250 than edge chamfer 255.

As shown on **FIGs. 19B****, 22A-B,** and **23,** cage drum 200 comprises an inner ring 202, in some embodiments. Inner ring 202 adds additional structural strength to a cage drum 200. In some embodiments, the plurality of transition elements 250 are coupled to and supported by inner ring 202 at their upper aspect.

**FIG. 21** is a perspective view of an arc of a drum having only ribless transition elements and no cage bar caps. **FIG. 21** shows drum 200 having outer boundary 206 comprised of a plurality of transition elements 250. Also of note, in some embodiments, such as the example shown in FIG. 21, edge chamfer completely replaces ramp 227 upon transition element 250.

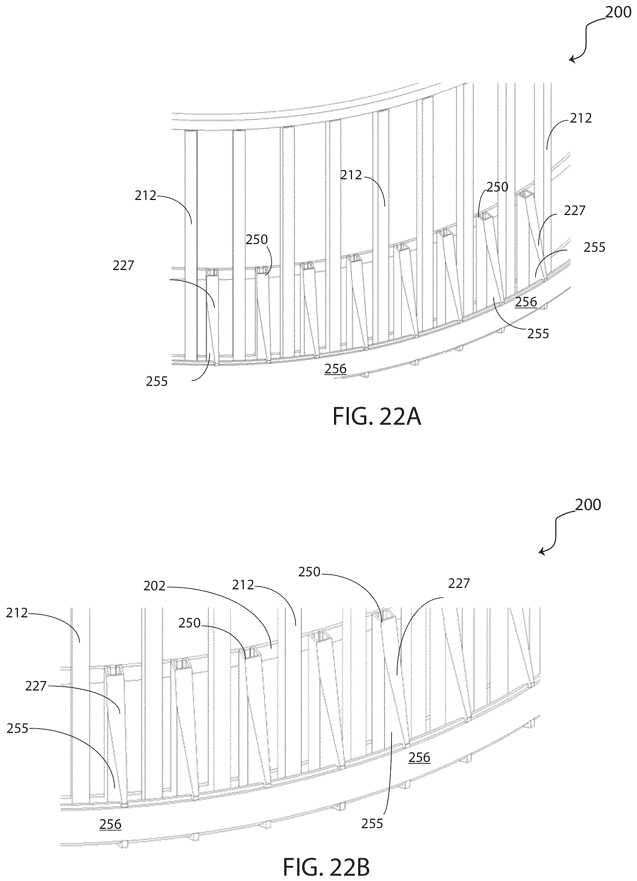

**FIG. 22A** is a perspective view of an arc of a drum having only ribless transition elements and no cage bar caps. **FIG. 22A** shows an example embodiment of a ribless cage drum 200 having alternating transition elements 250 and cage bars 212. Entrance ring 256 is coupled to the plurality of transition elements 250 whereupon belt 201 (not shown) enters engagement with transition elements 250 across entrance ring 256. As belt moves upward along helical path 101 (not shown) across outer boundary 206 of drum 200, belt inner edge 213 moves down the plurality of ramps 227 and onto outer boundary 206 formed solely by the plurality of cage bars 212.

**FIG. 22B** is magnified view of an arc of a drum having ribless transition elements alternating with cage bar caps. **FIG. 22B** shows drum 200 configured as a ribless cage drive having a plurality of cage bars 212 alternating with transition elements 250 dispersed around the periphery of drum 200. Entrance ring 256 is coupled to the plurality of transition elements 250, as shown. In this example, and in some other embodiments, transition element 250 comprises both a ramp 227 and an edge chamber 255 contiguous with each ramp 227 along a distance less than the total length of ramp 227.

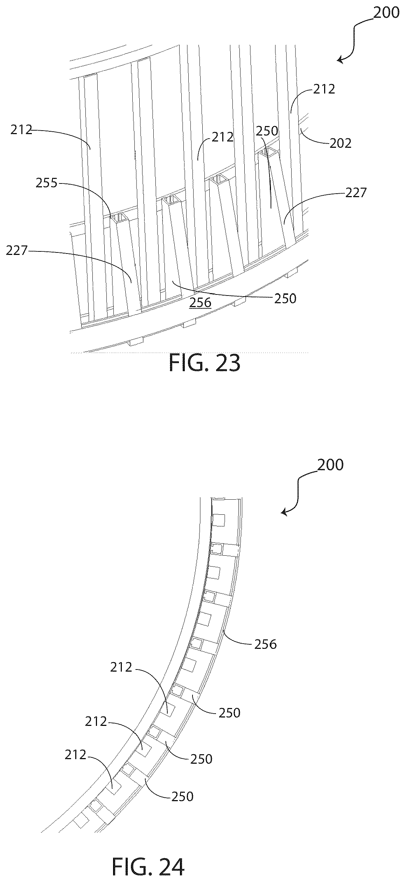

**FIG. 23** is a perspective view of an arc of a drum having alternating ribless transition elements and cage bars and an entrance ring. **FIG. 23** shows drum 200 comprising a plurality of parallel ribless transition elements 250 alternating between adjacent cage bars 212. Entrance ring 256 is also shown coupled to a lower aspect of the plurality of transition elements 250. In some embodiments, as shown, ribless transition element 250 comprises ramp 227. This this and some other embodiments, ribless transition element 250 comprises ramp 227 but not chamber 255. This is by way of example and not meant to be limiting. A plurality of engagement features of belt 102 (not shown) would first contact outer boundary 206 of drum 200 at entrance ring 256 at the lower aspect of drum 200 shonw in the figure, in this and some other embodiments, and then move progressively inward along ramps 227 until engaging with cage bar 212, or bar cap 213 (not shown). At the upper terminus of the plurality of ramps 227, the outermost surface of transition elements 225 is inside of the outermost surface of cage bars 212, allowing components of belt 102 engaged with and passing along ramp 227 to smoothly transition onto the outer surface the plurality of cage bars 212. Otherwise said, the drum outer boundary 206 (not shown) transitions from ramps 227 to cage bars 212.

**FIG. 24** is a top cutaway view of an arc of a drum having ribless transition elements alternating with cage bar caps and an entrance or exit ring coupled to the transition elements. **FIG. 24** shows a plurality of parallel transition elements 250 not having chamfer 255, disposed on drum 200 alternating between adjacent cage bars 212. Entrance ring 256 is coupled to the plurality of transition elements 250, as shown. It can easily be appreciated how belt 102 moves progressively upward tracing helical path 101 across drum outer boundary 206 from entrance ring 256, moving in a tapered-radius helical path up ramps 227 (not shown), and finally being eased onto cage bars 212 (or bar caps 213, in some embodiments) to engage with outer boundary 206 of drum 200.

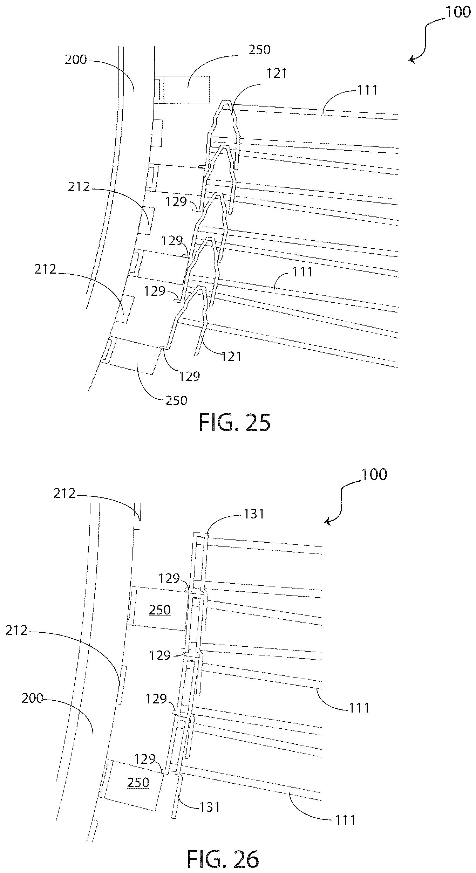

**FIG. 25** is a top view of a segment of belt comprising U-shaped links engaged on a ribless belt drum. **FIG. 25** shows drum 200 comprising a plurality of parallel transition elements 250. Tabs 129 disposed on U-links 121 are driven by ribless transition elements 250 coupled to alternating cage bars 212, as shown. The transition elements 250 hold drum engagement features-tabs 129, in this example-out and away from cage bars 212. As belt passes along helical path 101 upwards across transition elements 250, tabs 129 (or other belt engagement feature) move inwards up ramp 227 until drive drum 200 engagement of tabs 129 transfers from transition elements 250 to cage bars 212 (or bar caps 213), in some embodiments.

**FIG. 26** is a top view of a segment of belt comprising rho-shaped links engaged on a ribless belt drum. **FIG. 26** is similar to FIG. 25, however drum 200 engagement is with belt 102 comprising rho links 131. Each rho link 131 comprises a tab 129, as shown.

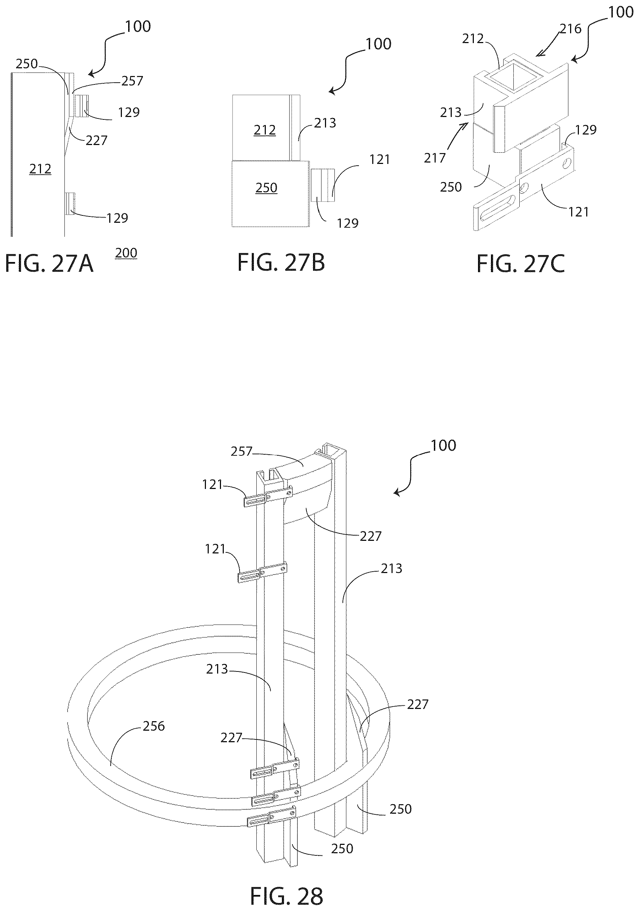

**FIGs. 27A-C**are magnified side views of cage drums bearing an exit ring. **FIG. 27A** shows a side-view of exit ring 257 mounted to cage bar 212 of drum 200. Tabs 129 on links traversing two adjoining courses of helical path 101 are shown, the upper link tab 129 having been urged outward up ramp 227 of transition element 250 onto exit ring 257, thereby disengaging from drive drum 200. **FIG. 27B** shows tab 129 of link 1212 resting upon transition element 250. Exit ring 257 is not present in this (and some other) embodiment wherein tab 129 or other belt 102 drive drum engagement feature passes off of drum 200 by means of adjacent recessed bar caps 213 mounted to underlying cage bars 212, such as in the example shown in the figure. **FIG. 27C** shows an alternative embodiment also having a recessed bar cap 213 wherein rod link 121 bearing tab 129 drive drum engagement feature is to be urged away from drum 200 by edge chamfers 255 on both the leading edge and the trailing edge of bar cap 213.

**FIG 28** is a partial view of links of a belt engaging with and disengaging from a cage drum having an entrance ring and transition elements. **FIG. 28** shows both entrance ring 256 and exit ring 257 of drum 200. Two adjacent cage bar caps 213 are shown absent other structures of drum 200, for clarity. A series of links 121 on several adjoining and non-adjoining courses of belt 102 are shown sequentially engaging and disengaging with drive drum 200. Beginning near the bottom of **FIG. 28****,** tabs 129 of links 121 contact entrance ring 256. The tabs 129, or other drum engagement feature presented by belt 102, move upward with each turn of the helical path onto transition element 250 along ramp 227. As links 121 move progressively inward along ramp 227, tabs 129 become engaged with bar caps 213. Similarly, tabs 129 contact ramp 227 of exit ring 257 at the upper portion of FIG. 28, near the upper end of drum 200 whereupon links 121 are urged away from cage bar caps 213 resulting in disengagement of belt 102 from drive drum 200. Upon careful examination of **FIG. 28****,** it will be seen that an outer surface of exit ring 257 extends beyond the outer belt-facing engagement surface of bar caps 213. Note also that in this, and in some other embodiments, exit ring 257 is discontinuous, being disposed along outer boundary 206 (not labeled) of drum 200 between cage bar caps 213 and/or cage bars 212. Similarly, in some embodiments, entrance ring 256 may be either continuous as shown, or discontinuous as is exit ring 257 in this example embodiment.

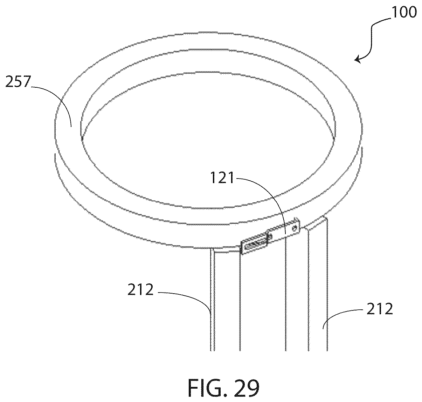

**FIG. 29** is a top perspective view of a recessed exit ring mounted on a cage drum. **FIG. 29** shows exit ring 257 coupled to two cage bars 212. Additional cage bars 212 and other components forming drum 200 are omitted for clarity. As shown, exit ring 257 is recessed with respect to cage bars 212, thereby allowing links 121, a single representative of which is shown for clarity to disengage from cage bars 212. Disengagement occurs as the plurality of links 121 and support rod inner ends 113 forming inner edge 105 of belt 102 moving around helical path 101 is successive tiers exits drum 100 at the upper end of helical path 101, in some embodiments.

Several aspects drum 200 bearing transition elements 250 to ease onboarding and offboarding of belt 102 upon drive drum 200 are important to note. Exit ring 257 may have a radius smaller than the cage radius (radius of drum outer boundary at cage bars 212 or bar caps 312 at a distance removed from exit ring and located between exit ring 257 and entrance ring 256), thereby configured to ease the transition from the cage bar 212 or bar cap 213 to exit ring 257. In some embodiments, exit ring 257 may be positioned over the plurality of cage bars 212 or bar caps 213, thereby creating a larger radius of drum outer boundary 206 to the exit ring 257. In some embodiments, exit ring 257 has a larger radius than the cage bar 212 radius. In some embodiments, exit ring comprises chamfer 255 to guide belt 102 onto the larger-radius exit ring 257. Exit ring 257 may be segmental and positioned between cage bars, as discussed herein and shown by several of the drawing figures. In some embodiments, engagement elements of belt 102, such as link tabs 129 or rod inner ends 113, for example, are spaced a distance equal to or slightly less than one or more compressed pitches from cage bar 212 or bar cap 213 to facilitate transfer of belt 102 from the transition bar 250 to the cage bar 212.

In some embodiments, belt system 100 comprising helical path 101 and drum 100 with ribless transition elements 250 comprise a belt engagement feature, such as tab 129 or rod inner end 113, wherein spacing between adjacent belt engagement features is lengthened by use of one or more standard links between links with drive elements, such that drive elements are placed only on every second, third, or other integer belt link 121, for example. The plurarlity of transition elements 250 dispersed around drum 200, in some embodiments, forms drum outer boundary 206 having an initial radius equal to the radius of entrance ring 256 and greater than the drum radius formed by the plurality of cage bars 212 or bar caps 213. In some embodiments, transition elements 250 do not extend to a height on drum 200 of outfeed 221.

The plurality of cage bars 212 in any embodiment having transition elements 250 may have a cage bar cap 231, in some embodiments. Cage bar cap 213 is a ribless bar cap, in some embodiments. In some embodiments, bar cap 213 comprises cap groove 214. In some embodiments, bar cap 213 is ribless and grooveless. In some embodiments, bar cap 213 and transition element 250 contact a driving feature of belt 102, such as cap 129 or inner rod end 113, e.g., on a radial face. Cage bar 213, bar cap 212, and transition element 250, alone or in any combination, may support the weight of belt 102 on a circumferential face.

Components of spiral belt system 100 are formed from suitable materials known in the art, without limitation. For example, drum 200, belt 102, and the listed components comprising drum 200 and belt 102 may be formed from metals such as steel, stainless steel, aluminum, and other metal alloys. In some embodiments, these components may be formed from thermostable plastics and other polymers known in the art. In some embodiments, a combination of metals, metal alloys, and plastic polymers are used. Because spiral conveyor system 100 is intended to be used in a wide range of industrial applications, multiple materials and combinations of components made from different materials is within the scope of the disclosures and teachings herein.

The embodiments and examples set forth herein were presented in order to best explain the present invention and its practical application, and to thereby enable those of ordinary skill in the art to make and use the invention. However, those of ordinary skill in the art will recognize that the foregoing description and examples have been presented for the purpose of illustration and example. The description as set forth is not intended to be exhaustive or to limit the invention to the precise form disclosed. Many modifications and variations are possible, in light of the teachings herein above.

## Claims

1. A spiral conveyor system comprising:
a belt formed from a plurality of segments and configured to move along a helical path, the belt having a belt width, an inner edge, and an outer edge, wherein the inner edge translates the helical path having an inside radius and the outer edge translates the helical path having an outside radius;
each of the plurality of segments comprising:
at least one rod having an elongate shape with a central portion terminating at an inner end and an outer end, wherein the inner end of each rod comprises an angle; and
at least one link coupled to the at least one rod, wherein each segment is movably coupled to two adjoining segments;
a drum formed generally as a cylinder having a central longitudinal axis coaxial with the helical path and an outer boundary, wherein the drum is configured to rotate around the central longitudinal axis and to releasably interact with each of the plurality of segments at the outer boundary;
wherein the belt moves along the helical path in response to the sequential interaction between the drum outer boundary and the belt segments as the drum rotates;
wherein the drum comprises a plurality of cage bars disposed around the outer boundary, each cage bar configured to releasably engage with a plurality of belt rod inner ends simultaneously;
wherein the plurality of cage bars are coupled to a corresponding plurality of cage bar caps, and wherein the cage bar caps reversibly interact with the belt inner edge;
wherein each of the plurality of cage bar caps comprises a groove; and
wherein the groove forms a non-orthogonal angle with the central longitudinal axis and is configured to releasably and simultaneously interact with two belt segment support rod ends bent at a corresponding non-orthogonal angle.

2. The system of claim 1, wherein the link comprises a first leg and a second leg, wherein the first leg and the second leg are generally parallel.

3. The system of claim 2, wherein the first leg comprises at least one circular cutout and at least one semicircular cutout, and the second leg comprises a slot cutout.

4. The system of claim 1, wherein the rod central portion is not coupled to a link.

5. The spiral conveyor system of claim 1, wherein each of the plurality of cage bar caps is ribless.

6. A spiral conveyor system comprising:
a belt formed from a plurality of segments and configured to move along a helical path, the belt having a belt width, an inner edge, and an outer edge, wherein the inner edge translates the helical path having an inside radius and the outer edge translates the helical path having an outside radius;
each of the plurality of segments comprising:
at least one rod having an elongate shape with a central portion terminating at an inner end and an outer end; and
at least one link coupled to the at least one rod, wherein each segment is movably coupled to two adjoining segments;
a drum formed generally as a cylinder having a central longitudinal axis coaxial with the helical path and an outer boundary, wherein the drum is configured to rotate around the central longitudinal axis and to releasably interact with each of the plurality of segments at the outer boundary;
wherein the belt moves along the helical path in response to the sequential interaction between the drum outer boundary and the belt segments as the drum rotates;
wherein the drum comprises a plurality of cage bars disposed around the outer boundary, each cage bar configured to releasably engage with a plurality of belt rod inner ends simultaneously;
wherein the plurality of cage bars are coupled to a corresponding plurality of cage bar caps, and wherein the cage bar caps reversibly interact with the belt inner edge;
the system further including an infeed and an outfeed, wherein the interaction between the drum and the segments occurs along a length of the drum central longitudinal axis beginning at the infeed and terminating at the outfeed;
wherein the drum has a first radius between the infeed and the outfeed, the first radius projecting from the longitudinal axis to the outer boundary;
wherein the drum has a second radius projecting from the longitudinal axis to the outer boundary at the infeed;
wherein the second radius is greater than the first radius;
wherein each of the cage bar caps includes a ramp disposed on the outer boundary such that the second radius transitions to the first radius along the ramp, and wherein the ramp is configured to move the belt inward from the second radius to the first radius beginning at the infeed; and
wherein the ramp is ribless.

7. The system of claim 6, and wherein the ramp further has a chamfer that allows distribution of belt tension along the inner edge of the belt as the belt transitions onto the drum outer boundary.

8. The system of claim 6, wherein the entirety of each of the plurality of cage bar caps is ribless.

9. The system of claim 6, wherein the chamfer is angled in a rearward direction with respect to belt travel.

10. The system of claim 6, wherein each of the plurality of cage bar caps includes a groove configured to engage with the belt.

11. A spiral conveyor system comprising:
a belt having a plurality of segments and configured to move along a helical path, the belt having a belt width, an inner edge, and an outer edge, wherein the inner edge translates the helical path along an inside radius and the outer edge translates the helical path along an outside radius,
each of the plurality of segments comprising at least one rod having an elongate shape with a central portion terminating at an inner end and an outer end and at least one link coupled to the at least one rod; and
a rotatable drum having:
a plurality of cage bars arranged around a central longitudinal axis forming a cage, and a plurality of cage bar caps fitted to some or all of the plurality of cage bars, wherein the cage bar caps define an outer boundary of the drum;
wherein the drum is configured to rotate around the central longitudinal axis coaxial with the helical path and to releasably interact with each of the plurality of segments at the outer boundary, and
wherein the belt moves along the helical path in response to the sequential interactions between the drum outer boundary and the belt segments effected by the rotating drum;
the system further including:
a plurality of intermediate cage bars disposed between the plurality of cage bars, the intermediate cage bars extending from an infeed of the drum part way toward an outfeed of the drum; and
a plurality of intermediate cage bar caps coupled to the plurality of intermediate cage bars;
wherein the intermediate cage bars include a ramp extending from a first radius at the infeed to a second radius at the drum outer boundary between the infeed and the outfeed, wherein the first radius is larger than the second radius; and
wherein the ramp is ribless.

12. The system of claim 11, wherein the ramp includes a chamfer that allows distribution of belt tension along the inner edge of the belt as the belt transitions onto the drum outer boundary.

13. The system of claim 11, wherein each of the intermediate cage bar caps is ribless.

14. The system of claim 11, wherein the chamfer is angled in a rearward direction with respect to belt travel.

15. The system of claim 11, wherein each of the plurality of cage bar caps comprises a groove.
